# EUROPÄISCHE PATENTSCHRIFT

(11) **EP 1 718 405 B1**
(45) Veröffentlichungstag und Bekanntmachung des Hinweises auf die Patenterteilung: **28.12.2016**
(21) Anmeldenummer: 05715560.8
(22) Anmeldetag: 25.02.2005
(51) Int. Cl.: B01J 13/00, C01G 25/00, C09C 1/00, C09C 3/00, B82Y 30/00, C01G 25/02

(54) **AMPHIPHILE NANOPARTIKEL ERHÄLTLICH DURCH PARTIELLE HYDROLYSE VON METALLORGANISCHEN VERBINDUNGEN**
AMPHIPHILIC NANOPARTICLES
NANOPARTICULES AMPHIPHILES

(30) Priorität: 26.02.2004 DE 102004009287
(43) Veröffentlichungstag der Anmeldung: 08.11.2006
(73) Patentinhaber: Leibniz-Institut für Neue Materialien gemeinnützige GmbH, 66123 Saarbrücken (DE)
(72) Erfinder: ARPAC, Ertugrul, Akdeniz Üniversitesi, 07200 Antalya (TR); SCHMIDT, Helmut, 66130 Saarbrücken-Güdingen (DE); AKARSU, Murat, 66111 Saarbrücken (DE)
(74) Vertreter: Patentanwälte Gierlich & Pischitzis Partnerschaft mbB
(86) Internationale Anmeldenummer: PCT/EP2005/002023
(87) Internationale Veröffentlichungsnummer: WO 2005/082514

(56) Entgegenhaltungen:
- WO-A-01/30702
- WO-A-93/21127
- J. LIVAGE, M. HENRY, C. SANCHEZ: "Sol-Gel Chemistry of transition Metal Oxides" PROG. SOLID ST. CHEM., Bd. 18, 1988, Seiten 259-341, XP002398104
- M.S. WONG, J.Y. YING: "Amphiphillic Templating of Mesostructured Zirconium Oxide" CHEM. MATER., Bd. 10, 1998, Seiten 2067-2077, XP002398105

## Beschreibung

Die vorliegende Erfindung betrifft amphiphile, nanoskalige Teilchen, Verfahren zu deren Herstellung und deren Verwendung.

Die Herstellung von prozesstechnisch verwendbaren Nanopartikeln ist nach wie vor eine interessante Fragestellung. Werden Nanopartikel über Sol-Gel- oder andere Fällungstechniken hergestellt, so kann die Agglomeration durch das Aufbringen einer Oberflächenladung (Doppelladungswolke) verhindert werden. Die abstoßenden Kräfte können über die Größe der Oberflächenladung (ζ-Potential) eingestellt werden, so dass sie ein Zusammenwachsen der Teilchen verhindern. Das ζ-Potential kann in der Regel durch die geeignete Wahl des pH-Wertes eingestellt werden. Diese Zusammenhänge wurden von Stern schon Anfang des 20. Jahrhunderts aufgezeigt. Die dadurch erzielte kolloidchemische Stabilität führt dazu, dass man nanopartikuläre Suspensionen, auch Sole genannt, über längere Zeiträume stabil halten kann.

Eine andere Form der Stabilisierung stellt die zusätzliche Verwendung von funktionellen Gruppen dar, die ebenfalls Ladungen tragen können und über das ζ-Potential zur Bildung stabiler Systeme herangezogen werden können. Dies wird elektrosterische Stabilisierung genannt. Die ladungsstabilisierten Nanosuspensionen oder Sole können am so genannten isoelektrischen Punkt destabilisiert werden, d.h. man wählt einen pH-Wert aus, bei der die Oberflächenladung null ist. Dann entstehen Aggregate oder auch Gele, falls die Aggregate sich zu größeren Einheiten vereinen.

Neben diesen Stabilisierungsformen über das Aufbringen von Ladungen gibt es noch eine weitere Form, bei der die Oberfläche der Nanopartikel mit Gruppen versehen wird, die der umgebenden Flüssigkeit sehr ähnlich sind. Dies lässt sich z.B. mit SiO₂-Partikeln erreichen, deren Oberfläche mit OH-Gruppen völlig bedeckt ist. Dies führt dazu, dass selbst beim isoelektrischen Punkt Kieselsäuren, z.B. in wässrigen Systemen, nicht ausfallen, weil die freie Grenzflächenenthalpie zwischen der Oberfläche und der umgebenden Flüssigkeit an sich schon ein Minimum darstellt und kein Enthalpiegewinn durch Aggregation auftritt. Derartige Stabilisierungen sind hauptsächlich für wässrige Kieselsole typisch (SiOH-Gruppen).

Die Vermeidung von Agglomeraten oder Aggregaten ist für die weitere prozesstechnische Verarbeitung der Nanopartikel von höchster Bedeutung. Dies trifft sowohl für die Herstellung von Formkörpern aus solchen Partikeln als auch für ihre Dispergierung in einem Matrixmaterial zu. Die interessanten Eigenschaften von Nanopartikeln, wie z.B. Grenzflächeneffekte oder Transparenz, können nur dann voll zur Geltung kommen, wenn sie homogen dispergierbar sind.

Während bei der elektrostatischen Stabilisierung (ohne zusätzliche Gruppen) insbesondere bei oxidischen, aber auch bei nichtoxidischen Systemen, eine starke Wechselwirkung über die Bildung von chemischen Bindungen (z.B. SiOSi-Bindungen, wesentlich stärker bei TiOTi oder ZrOZr) bei der Bildung von Aggregaten auftritt, die eine Redispergierbarkeit z.B. nur unter Einsatz von prozesstechnisch meist unerwünschten, starken Säuren ermöglicht, können bei einer Oberflächenmodifikationen mit funktionellen Gruppen, die nicht miteinander chemisch reagieren, zwar unter bestimmten Bedingungen Aggregate auftreten, die jedoch bei geänderten Bedingungen wieder leicht reversibel in die Ausgangspartikel zurückgeführt werden können.

Dieses Prinzip der chemischen Oberflächenmodifikation ist in der Literatur beschrieben und wird häufig zur Erhöhung der Redispergierbarkeit eingesetzt. Eine solche Oberflächenmodifizierung wurde z.B. von der Anmelderin beschrieben, z.B. in WO 93/21127 (DE 4212633) oder WO 96/31572. Der Nachteil dieser Oberflächenmodifizierung ist jedoch, dass dazu ein aufwändiger chemischer Schritt notwendig ist, bei dem das oberflächenmodifizierende Molekül zu einer stabilen Bindung mit Gruppen auf der Oberfläche der Partikel umgesetzt werden muss.

Für eine solche Oberflächenmodifizierung sind nach dem Stand der Technik eine Erwärmung, z.B. Erhitzen unter Rückfluss, und/oder die Einwirkung von Scherkräften, z.B. über Kneter oder Mühlen, erforderlich. Hinzu kommt, dass diese Oberflächenmodifizierung praktisch auf das jeweilige Dispergiermedium maßgeschneidert werden muss. So können z.B. hydrophil oberflächenmodifizierte Nanopartikel zwar in wässrigen oder wasserähnlichen Lösungsmitteln dispergiert werden, jedoch nicht in unpolaren und umgekehrt.

J. Livage, M. Henry, C. Sanchez, Prog. Solid St. Chem., 1988, 18, 259-341 beschreibt die Hydrolyse von Metallalkoxyden und untersucht den Mechanismus dieser Reaktion. Es werden kondensierte Metallalkoxyde kristallisiert und charakterisiert. Es werden keine amphiphilen Nanopartikel hergestellt.

M. S. Wong, J. Y. Ying, Chem.Mater. 1998,10, 2067-2077 offenbart die Herstellung von mesostrukturiertem Zirkonia unter Verwendung von amphiphilen Templaten. Nach der Hydrolyse wird der Niederschlag filtriert und kalziniert. Es werden keine amphiphilen Nanopartikel hergestellt.

WO 01/30702 A1 offenbart die Synthese von Zirkonoxidsolen, wobei wäßrige Zirkon-Polyethercarbonsäure-Salzlösungen in einem Autoklaven bei 150°C hydrolysiert und danach getrocknet werden. Die hergestellten Partikel weisen keine hydrolysierbaren Reste auf ihrer Oberfläche auf. Es werden keine amphiphilen Nanopartikel hergestellt.

Die erfindungsgemäße Aufgabe war nun darauf gerichtet, Nanopartikel zu entwickeln, bei denen eine derartige Oberflächenmodifizierung nicht erforderlich ist, die aber ohne weitere Prozessschritte entweder in organischen Lösungsmitteln oder in wässrigen Lösungsmitteln dispergiert werden können. Mit der Erfindung sollte weiterhin die Aufgabe gelöst werden, die Kosten für die Herstellung von Nanopartikeln deutlich zu reduzieren, indem einmal die Oberflächenmodifizierung als solche wegfallen kann und auch eine Abstimmung und Abhängigkeit von dem jeweils erforderlichen Dispergiermedium durch unterschiedliche Oberflächenmodifikatoren nicht mehr erforderlich ist.

Die erfindungsgemäße Aufgabe konnte überraschenderweise dadurch gelöst werden, dass amphiphile nanoskalige Teilchen bereitgestellt werden, die auf der Oberfläche hydrolysierbare Reste aufweisen, die lipophil sind. Die hydrolysierbaren Reste stammen insbesondere von den hydrolysierbaren Vorstufen der Teilchen. Die Erfindung betrifft weiter ein Verfahren zur Herstellung der amphiphilen nanoskaligen Teilchen, die auf der Oberfläche hydrolysierbare Reste aufweisen, die lipophil sind, welches umfasst die Hydrolyse und Kondensation einer oder mehrerer hydrolysierbarer Verbindungen, die mindestens eine lipophile hydrolysierbare Gruppe umfassen, mit einer unterstöchiometrischen Menge Wasser und b) das Entfernen von Lösungsmittel, um die erhaltenen amphiphilen Teilchen mit hydrolysierbaren Resten als Pulver zu erhalten.

Unter den hydrolysierbaren Verbindungen werden dabei die hydrolysierbaren Monomere oder Kondensationsprodukte davon verstanden. Die hydrolysierbaren Verbindungen werden auch als hydrolysierbare Vorstufen der Teilchen bezeichnet. Zur Herstellung kann bei hydrolysierbaren Verbindungen als Vorstufen der Teilchen, wie z.B. Alkoxiden, mit einer relativ geringen Menge an Hydrolyseagenz (z.B. Wasser, wässrigen Säuren oder wässrigen Basen) ein Nukleations- und Wachstumsprozess in Gang gesetzt werden, der entweder zu kristallinen oder amorphen anorganischen Festkörpernanopartikeln führt, deren Oberfläche noch mit nicht hydrolysierten Vorstufen bedeckt ist. Dabei ist bei der vorliegenden Erfindung besonders erstaunlich, dass die Teilchen zur Trockne eingedampft werden können, ohne ihre Amphiphilie zu verlieren.

Die erfindungsgemäßen Teilchen können überraschenderweise sowohl in wässrigen als auch in organischen Medien ohne weiteres dispergiert werden, ohne dass es einer zusätzlichen Oberflächenmodifizierung bedarf. Die amphiphilen Teilchen nach der Erfindung lassen sich z.B. erstaunlicherweise ohne weitere Behandlung sowohl in Wasser als auch in Toluol ohne weiteres dispergieren. Sofern die amphiphilen Teilchen mit unpolaren Lösungsmitteln dispergiert werden, ist darauf zu achten, dass das Lösungsmittel im wesentlichen wasserfrei ist, um eine Hydrolyse der hydrolysierbaren Gruppen zu vermeiden.

Wie in den nachstehenden Beispielen gezeigt, lässt sich dasselbe erfindungsgemäße amphiphile Teilchen in so unterschiedlichen Lösungsmitteln wie Wasser, Methanol, Toluol und Hexan ohne weiteres dispergieren und man kann die Teilchen, sofern keine Hydrolyse erfolgt, vom Dispersionsmedium befreien und dann erneut in demselben oder einem anderen Lösungsmittel redispergieren, d.h. die Teilchen sind in wasserfreien Lösungsmittelmedien reversibel dispergierbar.

Ohne sich an eine Theorie binden zu wollen, kann dieser überraschende Effekt vermutlich damit erklärt werden, dass die an der Teilchenoberfläche vorhandenen lipophilen hydrolysierbaren Reste mit unpolaren organischen Lösungsmitteln gut kompatibel sind und somit eine Agglomeration vermieden wird. Die leichte Dispergierbarkeit in Wasser lässt sich z.B. damit erklären, dass die hydrolysierbaren, lipophilen Reste im Wasser hydrolysiert werden, so dass nur noch hydrophile Gruppen auf der Oberfläche verbleiben, die mit dem polaren Dispersionsmedium gut kompatibel sind.

Solche amphiphile Teilchensysteme können z.B. von Lösungsmitteln befreit werden und das entstehende Pulver kann jederzeit wieder redispergiert werden. Werden zusätzliche Funktionen benötigt, lassen sich auch entsprechende Oberflächenmodifikationen, Dotierungen oder andere Anpassungen durchführen, wie nachstehend beschrieben wird.

Erfindungsgemäß werden daher amphiphile nanoskalige Teilchen bereitgestellt, die auf der Oberfläche hydrolysierbare Reste aufweisen, die lipophil sind. Die Ausdrücke nanoskalige Teilchen und nanoskalige Partikel bzw. Nanopartikel werden hier synonym verwendet.

Der Ausdruck "amphiphil" ist auf dem Gebiet der Chemie ein geläufiger Begriff. Amphiphilie beschreibt hier die Eigenschaft der Teilchen, sowohl in dem polaren oder hydrophilen Lösungsmittel Wasser als auch in unpolaren oder lipophilen Lösungsmitteln, wie Toluol oder Hexan, dispergierbar zu sein. Diese Kompatibilität resultiert bezüglich der unpolaren Medien von den vorhandenen lipophilen Gruppen an der Oberfläche der Teilchen und bezüglich Wasser von der Hydrolysierbarkeit der vorhandenen lipophilen Gruppen, die in Wasser unter Zurücklassung von hydrophilen Gruppen, wie Hydroxygruppen, auf der Oberfläche der Teilchen hydrolysiert werden. Neben den durch die Hydrolyse entstandenen, hydrophilen Gruppen können die Teilchen aber auch bereits vor Hydrolyse hydrophile Gruppen auf der Oberfläche aufweisen.

Das Konzept der Hydrophilie/Lipophilie ist dem Fachmann bestens bekannt. Lipophile bzw. hydrophobe Gruppen besitzen die Tendenz, nicht in Wasser einzudringen und darin zu verbleiben, während hydrophile Gruppen die Tendenz besitzen, in Wasser einzudringen und darin zu verbleiben.

Lipophile Verbindungen oder Gruppen besitzen die Neigung, sich in einem unpolaren Medium, z.B. einem organischen Lösungsmittel, z.B. Hexan oder Toluol, zu dispergieren oder zu lösen, während hydrophile Verbindungen oder Gruppen die Neigung besitzen, sich in einem polaren Medium, z.B. Wasser, zu dispergieren oder zu lösen. Der hydrophile Charakter kann sich z.B. durch Hydroxy-, Oxy-, Oxid-, Carboxylat-, Sulfat-, Sulfonatfunktionen, allgemein ionische Gruppen oder hydrophile Polyetherketten ergeben, während ein lipophiler Charakter z.B. typischerweise bei Kohlenwasserstoffresten wie Alkylresten oder aromatische Resten vorliegt.

Bei den amphiphilen Teilchen nach der vorliegenden Erfindung sind die hydrolysierbaren Reste lipophil, d.h. sie umfassen einen lipophilen Teil, der eine Affinität zu unpolaren Medien besitzt. Beispielsweise ergibt sich bei einer hydrolysierbaren Alkoxygruppe auf der Oberfläche eines Teilchens der lipophile Charakter durch die lipophile Alkylgruppe der Alkoxygruppe. Diese hydrolysierbaren Reste können als Ganzes als lipophile Gruppe bezeichnet werden. Bei den durch die Hydrolyse gebildeten und/oder bei den bereits vorhandenen hydrophilen Gruppen handelt es sich z.B. um Hydroxy-, Oxy- oder Oxidgruppen an der Oberfläche der Teilchen, beispielsweise bei oxidischen Teilchen.

Bei den amphiphilen Teilchen nach der Erfindung handelt es sich um nanoskalige Teilchen, d.h. die Teilchengröße ist kleiner als 1 µm. Unter Teilchengröße wird hier, sofern nicht anders angegeben, der mittlere Teilchendurchmesser bezogen auf das Volumenmittel verstanden, wobei ein UPA (Ultrafine Particle Analyzer, Leeds Northrup (laseroptisch, dynamische Laserlichtstreuung)) zur Messung verwendet werden kann. Der mittlere Teilchendurchmesser beträgt bevorzugt nicht mehr als 200 nm, besonders bevorzugt nicht mehr als 100 nm, z.B. 1 bis 200, bevorzugt 2 bis 100 nm, z.B. 2 bis 50 nm. Zur Bestimmung von sehr kleinen Teilchen in diesem Bereich können auch elektronenmikroskopische Methoden (z.B. über HR-TEM) verwendet werden. Es kann sich gegebenenfalls auch um faserförmige Teilchen handeln. In diesem Fall bezieht sich die mittlere Teilchengröße auf die Länge, die z.B. auch visuell mit mikroskopischen Verfahren ermittelt werden kann.

Bei den nanoskaligen Teilchen handelt es sich insbesondere um nanoskalige, anorganische Feststoffteilchen. Bevorzugt handelt es sich um Nanopartikel aus Metall, einschließlich Metalllegierungen, Metall- oder Halbmetallverbindungen, insbesondere Metallchalkogeniden. Hierfür können alle Metalle oder Halbmetalle (im folgenden auch gemeinsam als M abgekürzt) eingesetzt werden. Bevorzugte Metalle oder Halbmetalle M für die Metall- oder Halbmetallverbindungen sind z.B. Mg, B, Al, Ga, In, Si, Ge, Sn, Pb, Y, Ti, Zr, V, Nb, Ta, Mo, W, Fe, Cu, Ag, Zn, Cd, Ce und La oder Mischungen davon. Es kann eine Art von Nanopartikel oder eine Mischung von Nanopartikeln eingesetzt werden.

Die Nanopartikel können bevorzugt aus Metall- oder Halbmetallverbindungen sein. Beispiele sind (gegebenenfalls hydratisierte) Oxide wie ZnO, CdO, SiO₂, GeO₂, TiO₂, ZrO₂, CeO₂, SnO₂, Al₂O₃ (insbesondere Böhmit, AlO(OH), auch als Aluminiumhydroxid), B₂O₃, In₂O₃, La₂O₃, Fe₂O₃, Fe₃O₄, Cu₂O, Ta₂O₅, Nb₂O₅, V₂O₅, MoO₃ oder WO₃; Phosphate, Silicate, Zirconate, Aluminate, Stannate von Metallen oder Halbmetallen, und entsprechende Mischoxide (z.B. Indium-Zinn-Oxid (ITO), Antimon-Zinn-Oxid (ATO), fluor-dotiertes Zinnoxid (FTO), Leuchtpigmente mit Y- oder Euhaltigen Verbindungen, Spinelle, Ferrite oder Mischoxide mit Perowskitstruktur wie BaTiO₃ und PbTiO₃).

Bei den Nanopartikeln handelt es sich bevorzugt um ein Oxid, wobei das Oxid gegebenenfalls hydratisiert ist (Oxidhydrat), insbesondere von Mg, Si, Ge, Al, B, Zn, Cd, Ti, Zr, Ce, Sn, In, La, Fe, Cu, Ta, Nb, V, Mo oder W, besonders bevorzugt von Si, Al, B, Sn, Ti, Zr, Mg, V und Zn. Bevorzugte nanoskalige Teilchen sind SiO₂, Al₂O₃, AlOOH, Ta₂O₅, ZrO₂ und TiO₂, wobei ZrO₂ am meisten bevorzugt ist.

Nanoskaligen Teilchen können gewöhnlich auf verschiedene Weise hergestellt werden, z.B. durch Flammpyrolyse, Plasmaverfahren, Kolloidtechniken, Sol-Gel-Prozesse, kontrollierte Keim- und Wachstumsprozesse, MOCVD-Verfahren und Emulsionsverfahren. Diese Verfahren sind in der Literatur ausführlich beschrieben.

Die amphiphilen nanoskaligen Teilchen nach der Erfindung werden vorzugsweise durch ein Sol-Gel-Verfahren unter Bildung der nanoskaligen Teilchen hergestellt. Beim Sol-Gel-Verfahren werden gewöhnlich hydrolysierbare Verbindungen mit Wasser, gegebenenfalls unter saurer oder basischer Katalyse, hydrolysiert und gegebenenfalls zumindest teilweise kondensiert. Die Hydrolyse- und/oder Kondensationsreaktionen führen zur Bildung von Verbindungen oder Kondensaten mit Hydroxy-, Oxogruppen und/oder Oxobrücken, die als Vorstufen dienen. Durch geeignete Einstellung der Parameter, z.B. Kondensationsgrad, Lösungsmittel, Temperatur, Wasserkonzentration, Dauer oder pH-Wert, kann das die amphiphilen, nanoskaligen Teilchen enthaltende Sol erhalten werden. Weitere Einzelheiten des Sol-Gel-Verfahrens sind z.B. bei C.J. Brinker, G.W. Scherer: "Sol-Gel Science - The Physics and Chemistry of Sol-Gel-Processing", Academic Press, Boston, San Diego, New York, Sydney (1990) beschrieben.

Die Hydrolyse und Kondensationsreaktion wird dabei erfindungsgemäß so durchgeführt, dass die hydrolysierbaren Verbindungen nicht vollständig hydrolysiert werden und Nanopartikel gebildet werden, d.h. die gebildeten nanoskaligen Teilchen weisen an der Oberfläche noch hydrolysierbare Gruppen auf. Dem Fachmann, dem die Aufgabe gestellt wird, die hydrolysierbaren Verbindungen nicht vollständig zu hydrolysieren, ist bekannt, wie er dies durch geeignete Einstellung der oben genannten Parameter erreicht. Im folgenden werden einige bevorzugte Bedingungen erläutert.

Die Hydrolyse und Kondensation können in einem Lösungsmittel durchgeführt werden, sie können aber auch ohne Lösungsmittel durchgeführt werden, wobei bei der Hydrolyse Lösungsmittel oder andere flüssiger Bestandteile gebildet werden können, z.B. bei der Hydrolyse von Alkoholaten. Die Entfernung des Lösungsmittels kann die Entfernung vorhandener flüssiger Bestandteile einschließen. Die Entfernung des Lösungsmittels kann z.B. durch Filtrieren, Abzentrifugieren und/oder Trocknen, z.B. Abdampfen, erfolgen.

Bevorzugt erfolgt die Hydrolyse mit einer unterstöchiometrischen Menge an Wasser, d.h. das Molverhältnis von Wasser zu hydrolysierbaren Gruppen der hydrolysierbaren Verbindungen ist kleiner 1, bevorzugt nicht mehr als 0,8, besonders bevorzugt nicht mehr als 0,6 und noch bevorzugter nicht mehr als 0,5, insbesondere kleiner 0,5. Bevorzugt ist das Molverhältnis größer 0,1 und bevorzugter größer 0,2. Ein bevorzugtes Molverhältnis ist z.B. 0,25 bis 0,5, wobei bei bevorzugten Ausführungsformen die besten Ergebnisse mit einem Molverhältnis von etwa 0,45 erhalten werden.

Wie gesagt kann die Hydrolyse sauer oder basisch katalysiert werden, wobei die saure Katalyse bevorzugt ist. Die Hydrolyse kann bei Raumtemperatur durchgeführt werden (etwa 23°C), erfolgt aber bevorzugt unter Erwärmung, z.B. auf mindestens 40°C, bevorzugt mindestens 100°C oder mindestens 200°C. In einer weiteren bevorzugten Ausführungsform erfolgt die Hydrolyse unter Erwärmung und Druck (hydrothermale Reaktion), z.B. durch Erwärmen im verschlossenen Behälter. Geeignete Reaktionsbedingungen hängen aber naturgemäß von den eingesetzten Ausgangsverbindungen ab, so dass z.B. je nach Stabilität der Ausgangsverbindung ein breiter Bereich an geeigneten Bedingungen zweckmäßig sein kann. Der Fachmann kann geeignete Bedingungen in Abhängigkeit von den gewählten Verbindungen ohne weiteres auswählen.

Als hydrolysierbare Verbindungen bzw. Vorstufen können Alkoxide herangezogen werden, aber auch andere Verbindungen, die zur Hydrolyse befähigt sind, z.B. acylgruppenhaltige Vorstufen oder komplexgebildete Vorstufen, wie z.B. ß-Diketon-Komplexe. Es können auch Organyle mit Metallkohlenstoffverbindungen herangezogen werden. Als Metall- oder Halbmetallverbindungen kommen praktisch alle Metalle oder Halbmetalle der Haupt- und Nebengruppen in Frage, aus denen sich Alkoxide oder andere hydrolysierbare Verbindungen herstellen lassen. Die neben den reinen Metallen eingesetzten Halbmetalle sind z.B. Si, B oder Ge.. Die hierfür einsetzbaren hydrolysierbaren Verbindungen werden im folgenden weiter erläutert.

Als hydrolysierbare Verbindungen eignen sich prinzipiell hydrolysierbaren Metall- oder Halbmetallverbindungen, z.B. von den vorstehend aufgeführten Metallen und Halbmetallen M, die neben hydrolysierbaren Gruppen gegebenenfalls auch nicht hydrolysierbare Gruppen aufweisen können. Es können eine oder mehrere hydrolysierbare Verbindungen eingesetzt werden.

Es sei an dieser Stelle angemerkt, dass, wie dem Fachmann bekannt, die Hydrolysierbarkeit der Gruppe natürlich auch vom Zentralatom M abhängt, an das die Gruppe gebunden ist, so dass eine bestimmte Gruppe hydrolysierbar oder nicht hydrolysierbar sein kann, je nach dem, an welches M es gebunden ist. Diese Zusammenhänge sind dem Fachmann bekannt. So ist z.B. eine Alkylgruppe, die an Si gebunden ist, nicht hydrolysierbar, während die Alkylgruppe an einem anderen Zentralatom, z.B. Zirconium, hydrolysierbar sein kann. Bei letztgenannten Zentralatomen sind dann auch lipophile Alkylreste als hydrolysierbare Gruppen denkbar.

Weiter sind zum Beispiel bei manchen Metallen, wie z.B. bei Bis(acetylacetonat)zink, Zinkacetat oder Calciumacetat, Carboxylat- oder Acetylacetonatgruppen hydrolysierbar, während diese Gruppen bei größeren Metallen, wie z.B. Ti, Zr oder Fe, nicht mehr hydrolysierbar sind.

Die lipophilen hydrolysierbaren Gruppen, die sich auf der Oberfläche der erfindungsgemäßen Teilchen befinden, umfassen einen lipophilen Rest, wobei der lipophile Rest insbesondere mindestens 4 und bevorzugt mindestens 5 Kohlenstoffatome aufweist. Konkrete lipophile, hydrolysierbare Gruppen sind lipophile Alkoxy-, Alkenyloxy, Alkinyloxy, Aryloxy-, Aralkyloxy-, Alkaryloxy-, Acyloxy-, Ether-, wie Alkoxyalkoxy- oder Alkoxyalkoxyalkoxy-, und Acylreste, wobei Alkoxyreste besonders bevorzugt sind. Die genannten lipophilen Reste schließen auch entsprechende cyclische Reste ein, wie z.B. Cycloalkyloxyreste. Wie gesagt, hängt die Hydrolysierbarkeit der Gruppe auch vom Zentralatom ab, an das sie gebunden ist.

Die lipophilen Reste besitzen bevorzugt einen gesättigten, ungesättigten oder aromatischen, verzweigten oder unverzweigten Kohlenwasserstoffrest mit mindestens 4 und bevorzugt mindestens 5 Kohlenstoffatomen.

Beispiele für bevorzugte Alkoxygruppen sind C₄-C₂₀-Alkoxy, bevorzugt C₄-C₁₀-Alkoxy, wie n-Butoxy, i-Butoxy, sek.-Butoxy, tert.-Butoxy, lineares oder verzweigtes Pentoxy, Hexoxy, Heptoxy oder Octoxy, wie 2-Ethylhexoxy, Cyclohexyloxy. Die Alkoxygruppe kann verzweigt oder bevorzugt linear sein, eine vorteilhafte verzweigte Alkoxygruppe ist z.B. 2-Ethylhexoxy. Beispiele für Alkenyloxygruppen sind C₄-C₂₀-Alkenyloxy, bevorzugt C₄-C₁₀-Alkenyloxy, wie Butenoxy, Pentenoxy, Hexenoxy, Heptenoxy, Octenoxy und höhere Alkenoxygruppen, wobei Pentenyl und Hexenyl bevorzugt sind, z.B. CH₃CH₂CH=CHCH₂CH₂O- oder CH₂=CH(CH₂)₄O-. Die Alkenyloxygruppe kann verzweigt oder bevorzugt linear sein, die Doppelbindung kann an beliebiger Stelle sein. Es kann auch mehr als eine Doppelbindung vorhanden sein. Beispiele für Alkinyloxygruppen sind C₄-C₂₀-Alkinyloxy, bevorzugt C₄-C₁₀-Alkinyloxy, wie Pentinyloxy oder Hexinyloxy.

Lipophile Aryloxy-, Aralkyloxy- und Alkaryloxygruppen können z.B. 6 bis 20, bevorzugt 6 bis 15 Kohlenstoffatome aufweisen. Beispiele sind Phenyloxy, Naphthyloxy, Tolyloxy und Benzyloxy. Geeignete lipophile, hydrolysierbare Ethergruppen haben z.B. die allgemeine Formel R¹(-OR²)ₓO-, worin R¹ eine lipophile Alkylgruppe ist, R² eine Alkylengruppe, z.B. mit 1 bis 4 Kohlenstoffatomen, wie Ethylen oder Propylen, ist und x eine ganze Zahl von 1 bis 4, bevorzugt 1 oder 2 ist. Die Gruppe R¹ ist bevorzugt eine C₄-C₂₀-Alkylgruppe, wie Butyl, Pentyl, Hexyl, Cyclohexyl, Heptyl oder Octyl. Konkrete Beispiel sind Butoxyethoxy und Hexoxyethoxy.

Beispiele für Acylgruppen sind C₄-C₂₀-Acyl, bevorzugt C₄-C₁₀-Acyl, wie Butyryl, Valeroyl und Caproyl (C₆-Acyl). Beispiele für Acyloxygruppen, sofern hydrolysierbar, sind C₄-C₂₀-Acyloxy, bevorzugt C₄-C₁₀-Acyloxy, wie Butyryloxy, Valeroyloxy und Caproyloxy. Alkylgruppen, sofern hydrolysierbar, haben z.B. 4 bis 20 bevorzugt 4 bis 10 Kohlenstoffatome. Beispiele sind die vorstehend für die Ether genannten Gruppen R¹. Es können in diesem Fall auch fluorierte C₄-C₂₀-Alkylgruppen als hydrolysierbare lipophile Gruppen eingesetzt werden, z.B. C₂F₅-CH₂CH₂, n-C₆F₁₃-CH₂CH₂, n-C₈F₁₇-CH₂CH₂, n-C₁₀F₂₁-CH₂CH₂ i-C₃F₇O-CH₂CH₂CH₂, n-C₆F₁₃-CH₂CH₂ und n-C₆F₁₃-CH₂CH₂. Gegebenenfalls können auch andere hydrolysierbare Reste an mindestens einem C-Atom mit Fluor substituiert sein. Sofern die die lipophile Gruppe eine solche fluorierte Kohlenwasserstoffkette ist, kann sie auch weniger als 4 Kohlenstoffatome umfassen, z.B. mindestens 1 und bevorzugt mindestens 2 C-Atome.

Bei der hydrolysierbaren Metall- oder Halbmetallverbindungen kann es sich um Verbindungen der allgemeinen Formel MXₙ (I) handeln, worin M das vorstehend definierte Metall oder Halbmetall ist, X eine hydrolysierbare Gruppe ist, die gleich oder verschieden sein kann, wobei zwei Gruppen X durch eine zweizähnige hydrolysierbare Gruppe oder eine Oxogruppe ersetzt sein können oder drei Gruppen X durch eine dreizähnige hydrolysierbare Gruppe ersetzt sein können, und n der Wertigkeit des Elements entspricht und häufig 3 oder 4 ist.

In der Verbindung der Formel (I) ist mindestens eine hydrolysierbare Gruppe X lipophil. Bevorzugt sind alle Gruppen X der Formel (I) lipophil. Beispiele für hydrophile, lipophile Gruppen wurden vorstehend genannt. Weitere Beispiele für hydrolysierbare Gruppen X sind z.B. Halogen (F, Cl, Br oder I, insbesondere Cl und Br), C₁₋₃-Alkoxy, wie z.B. Ethoxy, n-Propoxy, i-Propoxy, C₁₋₃-Acyloxy, wie z.B. Acetoxy oder Propionyloxy, C₁-C₃-Alkenyloxy, wie Vinyl oder Allyloxy, C₁-C₃-Alkinyloxy oder C₂₋₃-Alkylcarbonyl, wie z.B. Acetyl.

Beispiele für hydrolysierbare Verbindungen mit bevorzugten lipophilen Gruppen sind z.B. Al(O-n-C₄H₉)₃, Al(O-sek.-C₄H₉)₃, Al(OC₂H₄OC₄H₉)₃, Ti(OC₄H₉)₄, Ti(pentoxy)₄, Ti(hexoxy)₄, Ti(2-ethylhexoxy)₄, Zr(OC₄H₉)₄, Zr(pentoxy)₄, Zr(hexoxy)₄, Zr(2-ethyl-hexoxy)₄, sowie Zr-Verbindungen, die komplexierende Reste aufweisen, wie z.B. β-Diketon- und (Meth)acrylreste, Si(OC₄H₉)₄, wobei die genannten Pentoxy- und Hexoxyreste linear oder verzweigt sein können.

Beispiele für weitere hydrolysierbare Verbindungen sind Al(OCH₃)₃, Al(OC₂H,₅)₃, Al(O-n-C₃H₇)₃, Al(O-i-C₃H₇)₃, AlCl₃, AlCl(OH)₂, Ti(OCH₃)₄, Ti(OC₂H₅)₄ TiCl₄, Ti(OC₂H₅)₄, Ti(O-n-C₃H₇)₄, Ti(O-i-C₃H₇)₄, ZrCl₄, Zr(OC₂H₅)₄, Zr(O-n-C₃H₇)₄, Zr(O-i-C₃H₇)₄, ZrOCl₂, Borsäure, BCl₃, B(OCH₃)₃, B(OC₂H₅)₃, SnCl₄, Sn(OCH₃)₄, Sn(OC₂H₅)₄, Si(OOCCH₃)₄, VOCl3 und VO(OCH₃)₃, Si(OCH₃)₄, Si(OC₂H₅)₄, Si(O-n- oder i-C₃H₇)₄, SiCl₄ und HSiCl₃.

Verbindungen mit vorstehend genannten hydrolysierbaren Gruppen, die nicht lipophil sind, können als Ausgangsverbindungen zur Herstellung von Verbindungen mit lipophilen hydrolysierbaren Gruppen verwendet werden.

Die hydrolysierbaren Verbindungen mit den genannten lipophilen hydrolysierbaren Gruppen können im Handel erhältlich sein. Sie können auch aus anderen hydrolysierbaren Verbindungen hergestellt werden, z.B. durch Austauschreaktionen. Dies kann z.B. zweckmäßig sein, wenn andere hydrolysierbare Verbindungen leichter zugänglich sind. So kann z.B. ein Metall- oder Halbmetallalkoxid, wie ein Metallethoxid oder -propoxid, mit einem höheren Alkohol, z.B. Pentanol, Hexanol oder 2-Ethylhexanol, umgesetzt werden, um die Alkoxygruppe des Alkoxids durch die Alkoxygruppe des höheren Alkohols zu ersetzen. Die Austauschreaktion kann vollständig oder nur teilweise durchgeführt werden.

Eine solche Austauschreaktion kann auch verwendet werden, um die gewünschten Verbindungen mit hydrolysierbaren, lipophilen Gruppen aus anderen hydrolysierbaren Verbindungen in situ zu bilden und ohne Isolierung direkt zu den gewünschten amphiphilen Teilchen umzusetzen.

Die hydrolysierbaren Metall- oder Halbmetallverbindungen, z.B. solche der obigen Formel (I), können auch komplexierende Reste aufweisen, wie z.B. β-Diketon- und (Meth)acrylreste. Insbesondere bei den reaktionsfähigeren Alkoxiden (z.B. von Al, Ti, Zr usw.) kann es sich unter Umständen empfehlen, diese in komplexierter Form einzusetzen, wobei Beispiele für geeignete Komplexierungsmittel ungesättigte Carbonsäuren und β-Dicarbonyl-Verbindungen, wie z.B. Methacrylsäure, Acetylaceton und Acetessigsäureethylester, sind.

Es können auch hydrolysierbare Verbindungen eingesetzt werden, die mindestens eine nicht hydrolysierbare Gruppe enthalten. Beispiele sind Silane der allgemeinen Formel RₐSiX₍₄₋ₐ₎ (II), worin die Reste R gleich oder verschieden sind und nicht hydrolysierbare Gruppen darstellen, die Reste X gleich oder verschieden sind und hydrolysierbare Gruppen oder Hydroxygruppen bedeuten und a den Wert 1, 2 oder 3 hat, oder ein davon abgeleitetes Oligomer. Der Wert a ist bevorzugt 1 oder 2.

In der allgemeinen Formel (II) sind die hydrolysierbaren Gruppen X, die gleich oder voneinander verschieden sein können, beispielsweise Wasserstoff oder Halogen (F, Cl, Br oder I), Alkoxy (vorzugsweise C₁₋₆-Alkoxy, wie z.B. Methoxy, Ethoxy, n-Propoxy, i-Propoxy und Butoxy), Aryloxy (vorzugsweise C₆₋₁₀-Aryloxy, wie z.B. Phenoxy), Acyloxy (vorzugsweise C₁₋₆-Acyloxy, wie z.B. Acetoxy oder Propionyloxy), Alkylcarbonyl (vorzugsweise C₂₋₇-Alkylcarbonyl, wie z.B. Acetyl), Amino, Monoalkylamino oder Dialkylamino mit vorzugsweise 1 bis 12, insbesondere 1 bis 6 Kohlenstoffatomen. Bevorzugte hydrolysierbare Reste sind Halogen, Alkoxygruppen (insbesondere Ethoxy und Methoxy) und Acyloxygruppen. Sofern mit einem Silan der Formel (II) hydrolysierbare lipophile Gruppen in die Nanopartikel eingeführt werden sollen, kann es bei X um eine der vorstehend z.B. bei den Verbindungen der Formel (I) beschriebenen hydrolysierbaren lipophilen Gruppen handeln.

Bei den nicht hydrolysierbaren Resten R, die gleich oder voneinander verschieden sein können, kann es sich um nicht hydrolysierbare Reste R mit einer funktionellen Gruppe oder um nicht hydrolysierbare Reste R ohne eine solche funktionelle Gruppe handeln.

Der nicht hydrolysierbare Rest R ohne funktionelle Gruppe ist beispielsweise Alkyl (vorzugsweise C₁₋₈-Alkyl, wie Methyl, Ethyl, n-Propyl, Isopropyl, n-Butyl, s-Butyl und t-Butyl, Pentyl, Hexyl, Octyl oder Cyclohexyl), Aryl (vorzugsweise C₆₋₁₀-Aryl, wie z.B. Phenyl und Naphthyl) sowie entsprechende Alkylaryle und Arylalkyle. Die Reste R und X können gegebenenfalls einen oder mehrere übliche Substituenten, wie z.B. Halogen oder Alkoxy, aufweisen.

Der nicht hydrolysierbare Rest R mit einer funktionellen Gruppe kann z.B. als funktionelle Gruppe eine Epoxid- (z.B. Glycidyl- oder Glycidyloxy-), Hydroxy-, Ether-, Amino-, Monoalkylamino-, Dialkylamino-, gegebenenfalls substituierte Anilino-, Amid-, Carboxy-, Alkenyl-, Alkinyl-, Acryl-, Acryloxy-, Methacryl-, Methacryloxy-, Mercapto-, Cyano-, Alkoxy-, Isocyanato-, Aldehyd-, Alkylcarbonyl-, Säureanhydrid- und Phosphorsäuregruppe umfassen. Diese funktionellen Gruppen sind über Alkylen-, Alkenylen- oder Arylen-Brückengruppen, die durch Sauerstoff- oder -NH-Gruppen unterbrochen sein können, an das Siliciumatom gebunden. Die Brückengruppen enthalten vorzugsweise 1 bis 18, vorzugsweise 1 bis 8 und insbesondere 1 bis 6 Kohlenstoffatome. Beispiele für nicht hydrolysierbare Reste R mit Alkenyl- oder Alkinylgruppe sind C₂₋₆-Alkenyl, wie z.B. Vinyl, 1-Propenyl, 2-Propenyl und Butenyl und C₂₋₆-Alkinyl, wie z.B. Acetylenyl und Propargyl.

Die genannten zweiwertigen Brückengruppen und gegebenenfalls vorliegende Substituenten, wie bei den Alkylaminogruppen, leiten sich z.B. von den oben genannten einwertigen Alkyl-, Alkenyl- oder Arylresten ab. Natürlich kann der Rest R auch mehr als eine funktionelle Gruppe aufweisen. Über die funktionelle Gruppe können Vernetzungsreaktionen möglich sein.

Beispiele für entsprechende Silane der Formel (II), die eine funktionelle Gruppe an dem nicht hydrolysierbaren Rest aufweisen, sind γ-Glycidyloxypropyltrimethoxysilan (GPTS), γ-Glycidyloxypropyltriethoxysilan (GPTES), 3-Isocyanatopropyltriethoxysilan, 3-Isocyanatopropyldimethylchlorsilan, 3-Aminopropyltrimethoxysilan (APTS), 3-Aminopropyltriethoxysilan, N-(2-Aminoethyl)-3-aminoproyltrimethoxysilan, N-[N'-(2'-Aminoethyl)-2-aminoethyl]-3-aminopropyltrimethoxysilan, Hydroxymethyltriethoxysilan, Bis-(hydroxyethyl)-3-aminopropyltriethoxysilan, N-Hydroxyethyl-N-methylaminopropyltriethoxysilan, 3-(Meth)acryloxypropyltriethoxysilan und 3-(Meth)acryloxypropyltrimethoxysilan. Weitere Beispiele für erfindungsgemäß einsetzbare hydrolysierbare Silane können z.B. auch der EP-A-195493 entnommen werden.

Es können auch Silane eingesetzt werden, die organische Reste aufweisen, welche mit Fluor substituiert sind. Derartige Silane werden z.B. in der WO 92/21729 detailliert beschrieben.

Durch den Einsatz von hydrolysierbaren Verbindungen mit nicht hydrolysierbaren Gruppen können zusätzliche Funktionsgruppen in die Nanopartikel eingebaut werden. Bei den Funktionen kann es sich z.B. um hydrophile oder hydrophobe Gruppen, um funktionelle Gruppen, die z.B. zur Vernetzung oder Anbindung von bestimmten Molekülen geeignet sind, um ionische Gruppen usw. handeln.

Natürlich können auch Mischungen der vorstehend genannten hydrolysierbaren Verbindungen verwendet werden, z.B. eine Verbindung mit hydrolysierbaren, lipophilen Gruppen zusammen mit einer hydrolysierbaren Verbindung, die keine nicht hydrolysierbare Gruppe und gegebenenfalls keine lipophile, hydrolysierbare Gruppe aufweist oder die eine nicht hydrolysierbare Gruppe aufweist.

In einer bevorzugten Ausführungsform werden die amphiphilen Teilchen mit Funktionsgruppen ergänzt. Bei diesen Funktionsgruppen handelt es sich um Gruppen auf der Oberfläche der amphiphilen Teilchen, die den Teilchen eine zusätzliche gewünschte Funktion verleihen. Durch eine solche Funktionalisierung können die Teilchen nach Bedarf gewünschten Eigenschaften angepasst werden.

Hierüber können die Teilchen z.B. gegenüber anderen Materialien, mit denen sie z.B. gemischt werden sollen, eine verbesserte oder, falls zweckmäßig, eine verschlechterte Kompatibilität erhalten. Durch die Funktionsgruppe kann z.B. eine hydrophobe, hydrophile, oleophobe oder oleophile Funktion eingeführt werden. Zur Erzielung hydrophober und/oder oleophober Eigenschaften können z.B. Funktionsgruppen eingeführt werden, die fluorierte Kohlenwasserstoffketten umfassen.

Eine weitere bevorzugte Funktionsgruppe ist eine solche, bei der eine oder mehrere funktionelle Gruppen auf der Oberfläche der Teilchen eingeführt werden. Über diese sind dann z.B. auch Reaktionen mit anderen Materialien oder zwischen den Teilchen möglich. Besonders bevorzugt sind funktionelle Gruppen, die für Vernetzungsreaktionen geeignet sind, so dass die so modifizierten Teilchen z.B. mit einem Matrixbildenden Material mit geeigneten funktionellen Gruppen durch chemische Reaktion mit dem Material verknüpft wird oder dieses vernetzt.

Derartige Funktionsgruppen können durch Umsetzung der amphiphilen Teilchen mit einem Oberflächenmodifizierungsmittel erhalten werden. Bei der Oberflächenmodifizierung von nanoskaligen Teilchen handelt es sich um ein bekanntes Verfahren, wie es von der Anmelderin z.B. in WO 93/21127 (DE 4212633) oder WO 96/31572 beschrieben wurde. Die Herstellung der oberflächenmodifizierten Teilchen kann prinzipiell auf zwei verschiedenen Wegen durchgeführt werden, nämlich zum einen durch Oberflächenmodifizierung von bereits hergestellten nanoskaligen Teilchen und zum anderen durch Herstellung dieser Teilchen unter Verwendung von Oberflächenmodifizierungsmitteln. Letztgenanntes wurde vorstehend ausführlich für die Silane der Formel (II) erläutert, die bei der Bildung der Teilchen in situ als Oberflächenmodifizierungsmittel wirken können.

Die Oberflächenmodifizierung von fertigen amphiphilen Teilchen kann einfach durch Mischen der Teilchen mit dem Oberflächenmodifizierungsmittel erfolgen. Die Umsetzung erfolgt gegebenenfalls in einem Lösungsmittel und, falls notwendig, durch mechanische oder thermische Energiezufuhr und/oder durch Katalysatorzugabe.

Als Oberflächenmodifizierungsmittel eignen sich Verbindungen, die zum einen über eine oder mehrere Gruppen verfügen, die mit auf der Oberfläche der amphiphilen Teilchen vorhandenen reaktionsfähigen Gruppen (wie beispielsweise OH-Gruppen) reagieren oder wechselwirken können. Die Oberflächenmodifizierungsmittel können z.B. kovalente, koordinative (Komplexbildung) und ionische (salzartige) Bindungen zur Oberfläche der Nanopartikel ausbilden, während unter den reinen Wechselwirkungen beispielhaft Dipol-Dipol-Wechselwirkungen, Wasserstoffbrückenbindungen und van der Waals-Wechselwirkungen zu nennen sind. Bevorzugt ist die Ausbildung von kovalenten Bindungen, ionischen Bindungen oder die Komplexierung.

Die Oberflächenmodifizierungsmittel weisen in der Regel ein relativ niedriges Molekulargewicht auf. Beispielsweise kann das Molekulargewicht weniger als 1.500, insbesondere unter 1.000 und vorzugsweise unter 700 und besonders bevorzugt unter 500 betragen, aber auch ein höheres Molekulargewicht, z.B. bis zu 2.000 und mehr, ist möglich.

Für die Oberflächenmodifikation der Nanopartikel kommen anorganische und organische Säuren, Basen, Chelatbildner, Komplexbildner, wie ß-Diketone, Proteine, die komplexbildende Strukturen aufweisen können, Aminosäuren oder Silane in Frage. Das Oberflächenmodifizierungsmittel kann in einer bevorzugten Ausführungsform ein Komplexbildner sein, der durch Komplexierung auf der Oberfläche der Teilchen die Modifizierung bildet. Konkrete Beispiele für Oberflächenmodifizierungsmittel sind gesättigte oder ungesättigte Mono- und Polycarbonsäuren, die entsprechenden Säureanhydride, Säurechloride, Ester und Säureamide, Aminosäuren, Proteine, Imine, Nitrile, Isonitrile, Epoxyverbindungen, Mono- und Polyamine, ß-Dicarbonylverbindungen, wie ß-Diketone, Oxime, Alkohole, Alkylhalogenide, Metallverbindungen, die über eine funktionelle Gruppe verfügen, die mit den Oberflächengruppen der Partikel reagieren kann, z.B. Silane mit hydrolysierbaren Gruppen mit mindestens einer nicht hydrolysierbaren Gruppe, z.B. hydrolysierbare Silane der obigen Formel (II). Spezielle Verbindungen für Oberflächenmodifizierungsmittel sind z.B. in den oben genannten WO 93/21127 und WO 96/31572 genannt.

Besonders bevorzugte Oberflächenmodifizierungsmittel sind gesättigte oder ungesättigte Carbonsäuren, ß-Dicarbonylverbindungen, Amine, Phosphonsäuren, Sulfonsäuren oder Silane. Wie gesagt, hat die Funktionsgruppe in einer bevorzugten Ausführungsform mindestens eine funktionelle Gruppe. Hierfür werden Oberflächenmodifizierungsmittel verwendet, die neben einer funktionellen Gruppe für die Anbindung an die Oberfläche der Teilchen mindestens eine weitere funktionelle Gruppe umfassen.

Beispiele für eine weitere funktionelle Gruppe für die Funktionsgruppe sind Hydroxy, Epoxid, Thiol, Amino, Carboxyl, Carbonsäureanhydrid, Isocyanato, Sulfonsäuregruppen, Phosphonsäuregruppen, quaternäre Amingruppen, C-C-Doppelbindungsgruppen, wie Acryl oder Methacryl, oder Carbonyl. Im weiteren Sinne kann man hierzu auch fluorierte Kohlenwasserstoffgruppen zählen. Dementsprechend werden dafür bi-, tri- oder höherfunktionelle Oberflächenmodifizierungsmittel verwendet, wobei bevorzugt Carbonsäuren, ß-Dicarbonylverbindungen, Amine, Phosphonsäuren, Sulfonsäuren oder Silane mit mindestens einer zusätzlichen Gruppe ausgewählt aus den oben genannten funktionellen Gruppen bevorzugt sind, wie ungesättigte Carbonsäuren, Hydroxycarbonsäuren, Aminosäuren, Aminosulfonsäuren, Aminophosphonsäuren, funktionalisierte ß-Dicarbonylverbindungen, Epoxysilane, (Meth)acrylsilane oder Isocyanatosilane.

Beispiele für bevorzugte Verbindungen, die zur Oberflächenmodifizierung verwendet werden, werden im folgenden aufgeführt:

Beispiele für Carbonsäuren, die vorzugsweise 1 bis 24 Kohlenstoffatomen enthalten, sind gesättigte Monocarbonsäuren (z.B. Ameisensäure, Essigsäure, Propionsäure, Buttersäure, Pentansäure, Hexansäure, Caprinsäure, Stearinsäure, Phenylessigsäure, Benzoesäure,), gesättigte Polycarbonsäuren mit 2 oder mehr Carboxylgruppen (z.B. Oxalsäure, Malonsäure, Adipinsäure, Bernsteinsäure, Glutarsäure und Phthalsäure), ungesättigte Carbonsäuren (z.B. Acrylsäure, Methacrylsäure, Crotonsäure, Maleinsäure, Fumarsäure und Ölsäure) und Hydroxycarbonsäuren (z.B. Glycolsäure, Milchsäure, Äpfelsäure und Citronensäure) sowie Derivate der Carbonsäuren, wie Anhydride, Ester (vorzugsweise C₁-C₄-Alkylester, z.B. Methylmethacrylat) und Amide.

Beispiele für ß-Dicarbonylverbindungen, die vorzugsweise 4 bis 12, bevorzugter 5 bis 8 Kohlenstoffatomen enthalten, sind Acetylaceton, 2,4-Hexandion, 3,5-Heptandion, Acetessigsäure und Acetessigsäure-C₁-C₄-alkylester; sowie funktionalisierte Dicarbonylverbindungen, wie 2-Acetoacetoxyethylmethacrylat, Hexafluoracetylaceton und Acetoacetamid.

Weitere Beispiele sind Mono- und Polyamine, insbesondere solche der allgemeinen Formel R₃₋ₙNHₙ, worin n = 0, 1 oder 2 und die Reste R unabhängig voneinander Alkylgruppen mit 1 bis 12, insbesondere 1 bis 8 und besonders bevorzugt 1 bis 6 Kohlenstoffatomen darstellen (z.B. Methyl, Ethyl, n- und i-Propyl, Butyl oder Hexyl) und Ethylenpolyamine (z.B. Ethylendiamin, Diethylentriamin etc.); Sulfonsäuren, wie 2-Aminoethansulfonsäure und 3-Aminobenzolsulfonsäure, Phosphonsäuren, Aminosäuren; Imine; und Silane, wie z.B. die hydrolysierbaren Silane mit mindestens einer nicht hydrolysierbaren Gruppen der obigen allgemeinen Formel (II), wobei solche mit einer funktionellen Gruppe am nicht hydrolysierbaren Rest bevorzugt sind.

Beispiele für weitere geeignete Oberflächenmodifikatoren sind quaternäre Ammoniumsalze der Formel NR¹R²R³R⁴⁺X⁻, worin R¹ bis R⁴ gegebenenfalls voneinander verschiedene aliphatische, aromatische oder cycloaliphatische Gruppen mit vorzugsweise 1 bis 12, insbesondere 1 bis 8 Kohlenstoffatomen darstellen, wie z.B. Alkylgruppen mit 1 bis 12, insbesondere 1 bis 8 und besonders bevorzugt 1 bis 6 Kohlenstoffatomen (z.B. Methyl, Ethyl, n- und i-Propyl, Butyl oder Hexyl), und X- für ein anorganisches oder organisches Anion steht, z.B. Acetat, OH⁻, Cl⁻, Br⁻ oder I⁻.

Die Kohlenstoffketten dieser Verbindungen können durch O⁻, S-, oder NH-Gruppen unterbrochen sein. Derartige Oberflächenmodifizierungsmittel sind z.B. Oxaalkansäuren, wobei 1, 2, 3 oder mehr Oxagruppen enthalten sein können. Beispiele sind Trioxadecansäure, 3-Oxabutansäure, 2,6-Dioxaheptansäure und deren Homologe.

Bevorzugte Beispiele für Oberflächenmodifizierungsmittel, die über eine zusätzliche Gruppe verfügen, die z.B. zur Vernetzung dienen kann, sind funktionalisierte ß-Dicarbonylverbindungen, wie 2-Acetoacetoxyethylmethacrylat, Hexafluoracetylaceton und Acetoacetamid, Aminosulfonsäuren, wie 2-Aminoethansulfonsäure und 3-Aminobenzolsulfonsäure, ungesättigte Carbonsäuren, wie Methacrylsäure und Ölsäure, und Hydroxycarbonsäuren, wie Milchsäure.

Die amphiphilen Nanopartikel können auch mit mindestens einem anderen Metall oder Halbmetall dotiert sein. In einigen Fällen ist auch ein Nichtmetall geeignet. Zur Dotierung kann jede geeignete Metall- oder Halbmetallverbindung bei der Herstellung der amphiphilen Nanopartikel zugesetzt werden, z.B. ein Oxid, ein Salz oder eine Komplexverbindung, z.B. Halogenide, Nitrate, Sulfate, Carboxylate (z.B. Acetate) oder Acetylacetonate. Das andere Metall kann in der Verbindung in jeder geeigneten Oxidationsvorstufe vorkommen. Beispiele für geeignete Metalle für die Dotierung sind Mg, Ca, Y, Sc, Ce, W, Mo, Zn, Cu, Ag, Au, Sn, In, Fe, Co, Ni, Mn, Ru, Al, Sb, V, Nb, Ir, Rh, Os, Pd und Pt.

Durch die Dotierung können bestimmte Eigenschaften erhalten werden. Zweckmäßige Dotiermittel hängen auch von dem jeweiligen Metall oder Halbmetall ab, die die Hauptkomponente bilden. Besonders bevorzugte Metalle zur Dotierung von ZrO₂-Nanopartikeln sind z.B. Mg, Ca, Y, Sc und Ce. Zur Dotierung von TiO₂-Nanopartikeln werden z.B. sehr gute Ergebnisse mit W(VI), Mo(VI), Zn(II), Cu(II), Sn(IV), In(III) und Fe(III) erreicht. Zur Herstellung elektrisch leitfähiger Nanopartikel können dotierte Metalloxide verwendet werden, z.B. dotiertes Zinnoxid, wie ITO (Indium-Zinnoxid), ATO (Antimon-dotiertes Zinnoxid) und FTO (fluordotiertes Zinnoxid) oder Aluminiumdotiertes Zinkoxid. Konkrete Beispiele für Metallverbindungen zur Dotierung sind Y(NO₃)₃·4H₂O, Sc(NO₃)₃·6H₂O, WO₃, MoO₃, FeCl₃, Silberacetat, Zinkchlorid, Kupfer(II)-chlorid, Indium(III)-oxid und Zinn(IV)-acetat. Das Atomverhältnis Dotierelement/Metall oder Halbmetall (Hauptkomponente) kann nach Bedarf gewählt werden und beträgt z.B. von 0,0005:1 bis 0,2:1.

Die erfindungsgemäß hergestellten Nanopartikel können auch mit einem anderen Material unter Bildung von Teilchen mit Kern-Schale-Aufbau beschichtet werden. Als Überzugsmaterial kommen anorganische, organisch modifizierte anorganische oder organische polymere Materialien in Betracht. Anorganische oder organisch modifizierte anorganische Überzüge oder Beschichtungen können z.B. aus den vorstehend genannten hydrolysierbaren Verbindungen erhalten werden. Organische Überzüge können aus üblichen, als Bindemittel in Beschichtungszusammensetzungen verwendeten organischen Polymeren oder gegebenenfalls modifizierten natürlich vorkommenden Polymeren, wie verschiedenen Zuckern, z.B. Stärke, und Derivaten davon, Proteinen oder Cellulosen oder Derivaten davon gebildet werden.

Es können zur Herstellung und Dispergierung der Nanopartikel alle üblichen Lösungsmittel verwendet werden. Als Lösungsmittel eignen sich z.B. Alkohole, Ketone, Kohlenwasserstoffe, aber auch sauerstoffhaltige Lösungsmittel wie Tetrahydrofuran können verwendet werden. Für wässrige oder wasserhaltige Lösungsmittel kommen Wasser selbst, Säuren und Basen, aber auch Mischungen von mit Wasser mischbaren Lösungsmitteln wie z.B. Alkohole oder Ketone in Frage.

Neben den üblichen Lösungsmitteln können auch Monomere, die in einem Lösungsmittel eingemischt sind, Verwendung finden. Es können sogar reine organische Monomere wie z.B. Methacrylsäureester als Lösungsmittel herangezogen werden. Werden Monomere als Lösungsmittel herangezogen, so kann nach Dispergierung auch ein Polymerisationsprozess oder ein Polykondensationsprozess durchgeführt werden, um z.B. Nanokomposite aus den Nanopartikeln und der Polymermatrix herzustellen. Es ist auch möglich, Oligomere oder bereits fertige Polymere zu verwenden, sofern sie in den verwendeten Lösungsmitteln löslich sind.

Als Matrixbildner oder Bindemittel können dem Fachmann bekannte organische Polymere oder die entsprechenden Monomere oder Oligomere eingesetzt werden, z. B. Polyacrylsäure, Polymethacrylsäure, Polyacrylate, Polymethacrylate, Polyolefine, z.B. Polybutadien, Polystyrol, Polyamide, Polyimide, Polyvinylverbindungen, wie Polyvinylchlorid, Polyvinylalkohol, Polyvinylbutyral, Polyvinylacetat und entsprechende Copolymere, z. B. Poly(ethylenvinylacetat), Polyester, z. B. Polyethylenterephthalat oder Polydiallylphthalat, Polyarylate, Polycarbonate, Polyether, z. B. Polyoxymethylen, Polyethylenoxid oder Polyphenylenoxid, Polyetherketone, Polysulfone, Polyepoxide und Fluorpolymere, z. B. Polytetrafluorethylen, oder die entsprechenden Monomere oder Oligomere. Es können funktionelle Gruppen enthalten sein, über die eine Vernetzung möglich ist.

Die erfindungsgemäßen amphiphilen Nanopartikel werden üblicherweise als Sol in dem Lösungsmittel erhalten und werden daraus durch ein übliches Trennverfahren als Pulver gewonnen. Erstaunlicherweise sind die amphiphilen Nanopartikel herstellungsbedingt sowohl in wässrigen als auch in organischen (prototropen und unpolaren) Lösungsmitteln vollständig dispergierbar.

Anwesende lipophile hydrolysierbare Gruppen auf der Oberfläche der amphiphilen Nanopartikel sorgen für eine gute Kompatibilität und damit Dispergierbarkeit in unpolaren Lösungsmitteln. Für die Dispergierung in wässrigen Medien lässt sich außerdem unter Einfluss des Wassers die hydrolysierbare Hülle automatisch leicht entfernen und man erhält wasserdispergierbare Systeme. Die vorhandenen hydrophilen Gruppen, z.B. Hydroxy-, Oxy- oder Oxidgruppen an der Oberfläche der Teilchen, ermöglichen die Dispergierbarkeit in polaren Lösungsmitteln. Die Erfindung hat den Vorteil, dass es nicht wie im Stand der Technik erforderlich ist, eine aufwändige Oberflächenmodifizierung durchzuführen, um eine gute Redispergierbarkeit zu erhalten.

Die amphiphilen Nanopartikel nach der Erfindung können als solche oder als Sol bzw. auch in Form einer die amphiphilen Nanopartikel enthaltenden Zusammensetzung verwendet werden. Die Zusammensetzung kann für den Anwendungszweck geeignete Additive enthalten. Insbesondere kann die Zusammensetzung einen oder mehrere übliche Matrixbildner enthalten. In einer bevorzugten Ausführungsform weisen die amphiphilen Teilchen vernetzbare Oberflächengruppen auf, die mit funktionellen Gruppen des Matrixbildners reagieren können. Die amphiphilen Nanopartikel können bei der anschließenden Verarbeitung zur Bildung gewünschter Erzeugnisse natürlich gegebenenfalls die hydrolysierbaren Gruppen verlieren, z.B. beim Ausbrennen zur Bildung von keramischen Produkten oder durch bei nachgelagerten Verarbeitungsstufen erfolgende Hydrolyse.

Als Zusammensetzungen, die amphiphile Nanopartikel nach der Erfindung enthalten, kommen z.B. die verschiedensten Beschichtungssysteme, wie Lacke, Kleber, Massen, wie Dichtmassen und Formmassen, Komposite, keramische Rohstoffe, wie Schlicker, Pasten, Suspensionen, Sole aller Art, Glasschmelzen und glasbildende Sole, Lösungen und gelöste Monomere, Polymere und Polymerschmelzen in Frage, die auch noch andere Komponenten, z.B. die genannten Matrixbildner, Weichmacher, thermisch und strahlungsinduzierte Polymerisations- und Polykondensationskatalysatoren und bekannte weitere Additive, auch andere Nanopartikel, enthalten können. Ebenso kommen Metalle oder Kombinationen von polymeren, glasartigen, metallischen oder keramischen Matrixvorstufen als Hybridmaterialien als Matrixbildner in Frage.

Als Matrixbildner kommen daher alle Materialien in Frage, die als Vorstufen zur Herstellungen von Matrixkörpern aus Kunststoff bzw. organischen Polymeren, Metall, Glas, Keramik, Glaskeramik, Baustoffen, Kompositen oder Hybridmaterialien davon geeignet sind. Natürlich können auch die amphiphilen Nanopartikel als Matrixbildner fungieren und allein verwendet werden, z.B. zur Herstellung einer Keramik. Solche Vorstufen sind z.B. die bereits vorher für den Einsatz als Lösungsmittel beschriebenen organischen Monomere, Oligomere oder Polymere, aus den eine rein organische Polymermatrix gebildet werden kann.

Es können auch matrixbildende Vorstufen zu Bildung anorganischer oder organisch modifizierter anorganischer Matrizes verwendet werden. Hierfür können ebenfalls aus hydrolysierbaren Verbindungen bzw. Monomeren vorzugsweise nach dem vorstehend beschriebenen Sol-Gel-Verfahren über eine Hydrolyse und Kondensation Polykondensate gebildet werden, die im fertigen Erzeugnis eine anorganische oder organisch modifizierte anorganische Matrix bilden können. Werden die amphiphilen Nanopartikel nach der Erfindung mit solchen Polykondensaten oder Vorstufen davon gemischt, können entsprechende Nanokomposite aus Nanopartikeln in der entsprechenden Sol-Gel-Matrix hergestellt werden.

Diese Sol-Gel-Matrix kann rein anorganisch sein, d.h. beim Erhitzen Gläser oder keramische Werkstoffe ergeben, sie kann aber auch eine sogenannte Hybridmatrix (organisch modifizierte anorganische Matrix) sein, wenn z.B. Alkoxide oder organofunktionelle Silane verwendet werden. Weiterhin können solche Sol-Gel-Matrizes auch zusätzlich mit organischen Monomeren, Oligomeren oder Polymeren, z.B. den vorstehend beschriebenen, versehen werden, die ebenfalls Polymerisations- und Polykondensationsprozesse eingehen können und/oder als Flexibilisatoren dienen können. Vorteilhaft sind insbesondere Polyvinylalkohol, Polyvinylpyrrolidon, Polyacrylamid, Polyvinylpyridin, Polyallylamin, Polyacrylsäure, Polyvinylacetat, Polymethylmethacrylsäure, Stärke, Gummi arabicum, andere polymere Alkohole wie z.B. Polyethylen-Polyvinylalkohol-Copolymere, Polyethylenglycol, Polypropylenglycol und Poly(4-vinylphenol) bzw. davon abgeleitete Monomere oder Oligomere.

Zur Herstellung der Polykondensate oder der Vorstufen davon können die vorstehend ausgeführten hydrolysierbaren Verbindungen verwendet werden, insbesondere die hydrolysierbaren Verbindungen der Formeln (I) und (II). Bevorzugt werden hierbei glas- oder keramikbildende Halbmetalle oder Metalle M eingesetzt, insbesondere Elemente aus den Hauptgruppen III bis V und/oder den Nebengruppen II bis V des Periodensystems der Elemente und Mg. Vorzugsweise handelt es sich um die Elemente Si, Al, B, Sn, Ti, Zr, Mg, V oder Zn, insbesondere solche von Si, Al, Ti, Zr und Mg oder Mischungen von zwei oder mehr dieser Elemente. Selbstverständlich können auch andere glas- oder keramikbildende Elemente eingebaut werden, insbesondere solche von Elementen der Hauptgruppen I und II des Periodensystems (z.B. Na, K und Ca) und der Nebengruppen VI bis VIII des Periodensystems (z.B. Mn, Cr, Fe und Ni). Es können auch Lanthanoide verwendet werden.

Werden hydrolysierbare Verbindungen mit nicht hydrolysierbaren organischen Resten verwendet, z.B. die Silane der Formel (II), werden organisch modifizierte anorganische Polykondensate erhalten, z.B. Polyorganosiloxane, die in organisch modifizierte Matrizes überführt werden können.

Durch eine entsprechende Reaktionsführung, z.B. durch eine partielle Hydrolyse bei der Einbringung in anorganische Monomeren (hydrolysierbare Verbindungen), lassen sich nach dem Polymerisationsprozess Wechselwirkungen von Nanopartikel zu Nanopartikel erzeugen, und diese Wechselwirkungen können zur Viskositätssteuerung des voll oder teilweise polymerisierten Monomers herangezogen werden.

Die amphiphilen Nanopartikel nach der Erfindung können in Form eines Pulvers, eines Sols bzw. einer Zusammensetzung, wie vorstehend erläutert, z.B. zur Herstellung von kompakten Werkstoffen und Bauteilen verwendet werden. Es können auch über viskose Zwischenstufen Beschichtungen hergestellt werden. Solche Beschichtungen können über photolithographische Verfahren, Laserstrukturierung, Zweiwellenmischverfahren oder holographische Techniken strukturiert werden. Es können daher eine zweidimensionale Struktur, z.B. Schichten oder Folien, oder ein Formkörper, insbesondere eine keramische zweidimensionale Struktur oder ein keramischer Formkörper, gebildet werden.

Die amphiphilen Nanopartikel nach der Erfindung, insbesondere entsprechende ZrO₂-Nanopartikel, eignen sich zur Verwendung in Beschichtungsstoffen, Klebstoffen, Harzen und Dichtungsmassen, die für verschiedene Substrate verwendet werden können. Hierfür verwendete Substrate bestehen im allgemeinen aus Metall, Kunststoff, gegebenenfalls modifizierten Naturstoffen, Keramik, Beton, Ton und/oder Glas oder Mischungen davon. Nach entsprechender Härtung, z.B. thermisch, katalytisch, durch Bestrahlung oder einer Kombination davon, können sehr vorteilhafte Eigenschaften der Schichten erreicht werden, insbesondere bezüglich Transparenz, Flexibilität, mechanischer Beständigkeit, Abriebfestigkeit, Korrosionsbeständigkeit, verbessertem tribologischem Verhalten, angepasstem Brechungsindex (hochbrechend), einer verbesserten Entformung und verringerter Anhaftung. Solche vorteilhaften Eigenschaften können auch bei den vorstehend erläuterten selbsttragenden Formkörpern, wie Bauteilen oder Folien, aus den amphiphilen Nanopartikeln erreicht werden.

Es folgen Anwendungsbeispiele für Gegenstände, die Bauteile und Komponenten einschließen, die eine Polymer-, Metall-, Keramik- oder Glasmatrix umfassen, bei deren Herstellung die erfindungsgemäßen amphiphilen Nanopartikel verwenden werden können, oder die Beschichtungen, Schichten, Klebeverbindungen oder Lackierungen besitzen, bei deren Herstellung die erfindungsgemäßen amphiphilen Nanopartikel verwenden werden können:

Gegenstände, die Bauteile und Komponenten einschließen, bei deren Herstellung die erfindungsgemäßen amphiphilen Nanopartikel verwenden werden, eignen sich für die Herstellung von Arbeitsgerätschaften sowie Teilen davon, Vorrichtungen und Maschinen für gewerbliche bzw. industrielle Zwecke und Forschung sowie Teilen davon, für Fortbewegungs- und Transportmittel und Teilen davon, Haushaltsgegenstände und Arbeitsgerätschaften für den Haushalt sowie Teilen davon, Ausrüstungen, Geräten und Hilfsmitteln für Spiel, Sport und Freizeit und Teilen davon, Geräten, Hilfsmitteln und Vorrichtungen für medizinische Zwecke und Teilen davon, Implantate und Prothesen für medizinische Zwecke, sowie Baustoffe und Teile von Bauwerken.

Konkrete Beispiele für derartige Gegenstände, die Bauteile und Komponenten einschließen, werden im folgenden angegeben:

Arbeitsgerätschaften, Vorrichtungen und Maschinen für gewerbliche bzw. industrielle Zwecke und Forschung und Teilen davon: Formen (Press-, Tiefzieh-, Gieß-, Stanzformen), Schütttrichter, Zahnräder, Einfüllanlagen, Extruder, Wasserräder, Walzen, Spritzgussteile, Gehäuse, Rohre, Tastaturen, Schalterkhöpfe, Werkzeuge, Transportbänder, Druckmaschinen, Siebdruckschablonen, Abfüllmaschinen, Rüttelbänder, Siebe, Bohrköpfe, Bohrer, Turbinen, Pumpen, Sägeblätter, Abdeckungen, Türgriffe, Displays, Linsen, Werkzeuggriffe, Flüssigkeitsbehälter, Isolatoren, Computergehäuse, Gehäuse für elektronische Geräte, Maschinengehäuse, Maschinenteile wie z.B. Wellen, Kugellager, Bolzen, Schrauben, Nieten, Folien, Membranen, Fingerprintsensoren. Schneidwerkzeuge, Plasmaschneiddüsen, Stanzwerkzeuge, Hammerwerke, Mühlenzubehör, Abgaskühler, Hochtemperaturwärmetauscher, spanende Metallverarbeitung, Metall-Keramik-Binder, Hochtemperaturventilatoren, Turbinenschaufeln, Reaktormaterialien, Solar Coating (Zr/ZrO₂), Katalysatoren, Anodenmaterial für SOFC, Schutzrohr für Thermoelemente, Linsenhalter, Gasturbinen und Teile davon, Raketenteile, Armierungen, Trübgläser für Fenster, Duschabtrennungen, Trennwände, Lampen, Leuchtmittel, Einschmelzungen und Fügeverbindungen für Leuchtmittel, elektrische und elektronische Bauteile, optische Bauteile.

Fortbewegungs- und Transportmittel (z.B. Pkw, Lkw, Omnibus, Motorrad, Moped, Fahrrad, Eisenbahn, Straßenbahn, Schiff und Flugzeug) und Teile davon: Außenbeschichtungen von Fahrzeugen, Korrosionsschutzlacke, Klarlacke, Karosserie, Scheinwerfer, Rückleuchten, Innen- und Außenspiegel und deren Verkleidungen, Windschutzscheiben, Scheibenwischer, Heckscheiben, Seitenscheiben, Schutzblechs von Fahrrädern und Motorrädern, Bremsen von Fahrräder und Motorrädern, Motorradhelme, Visiere, Instrumente von Motorrädern, Sitzteile, Sattelteile, Türgriffe, Lenkräder, Chromteile, Felgen, Tankstutzen, Tank, Behälter (Kühlmittel-, Scheibenwasser-), Dichtungen, Schläuche, Nummernschilder, Gepäckträger, Dachträger, Dachcontainer für Pkws, Sitzbezüge, Lederapplikationen, Cockpits und Innen- und Außenverkleidungen, Reifen und Stoßstangen, Schiffsrümpfe, Masten, Segel, Ladeklappen, Flügel, Leitwerke, Flugzeugfenster, kratzfeste Kunststoffscheiben, Flugzeugkarosserieteile, die mechanisch hoch belastet werden, Düsen für Raketenmotoren, Armierungen.

Haushaltsgegenstände und Arbeitsgerätschaften für den Haushalt sowie Teile davon: Möbel, Mülleimer, Geschirr, Tabletts, Porzellan, Lampenschirme, Möbelbeschläge, Besteck, Kochutensilien (Löffel, Raspeln, usw.), Gehäuse für Unterhaltungselektronik und Küchengeräte, Matratzen, Spülen, Parkett, Fußbodenbeläge aus Kunststoffen, Laminat, Paneele, Arbeitplatte, Griffe für Pfannen und Töpfe, Pfannen und Töpfe, Möbelfurnier, Staubsauger, Mixer, Brotschneidemaschine, Bügeleisen, Fingerprintsensoren.

Ausrüstungen, Geräte und Hilfsmittel für Spiel, Sport und Freizeit und Teile davon: Gartenmöbel, Gartengeräte, Werkzeuge, Spielplatzgeräte, Tennisschläger, Tischtennisschläger, Tischtennisplatten, Ski, Snowboards, Surfboards, Golfschläger, Sitzgelegenheiten in Parks, Skistiefel, Taucherkleidung, Taucherbrillen.

Geräte, Hilfsmittel und Vorrichtungen für medizinische Zwecke und Kranke: Prothesen, Implantate, Katheder, Zahnprothesen, Zahnimplantate, Zahnspangen, Zahnersatz, Inlays, Zahnfüllungen, Zahnfüllstoffe, Brücken, Schrauben, medizinische Bestecke, Rollstühle, sowie Gehäuse und Bauteile von medizinischen Geräten, lnstrumentenhalter für medizinische Geräte und Türen und Abdeckungen für medizinische Geräte.

Baustoffe und Teile von Bauwerken: Fußböden und Treppen aus Naturstein (Beton usw.) Fußbodenbeläge aus Kunststoff, Fußbodenleisten, Fensterrahmen, Fensterbänke, Türen, Türgriffe, Armaturen in Küche, Bad und WC, Rohre, Kabelkanäle, Geländer, tragende Bauteile, Regenrinnen, Regentonnen, Öltanks, Kaminrohre, Kunststoffdächer, Panoramadächer, Toiletten, Badewannen, Duschkabinen, Wintergärten, Spiegel, Lichtschalter, Wand- und Bodenkacheln, Verglasungen aus Kunststoff, Handläufe von Geländern und Rolltreppen, Skulpturen und allgemein Kunstwerke aus Naturstein, Metalle im Innen und Außenbereich, Stahlträger, Träger, freistehende Metallkonstruktionen.

Andere Anwendungsbeispiele sind Garn, Seile, Lebensmittelverpackungen, allgemein alle Gegenstände, die aus Gummi und Kunststoffen hergestellt sind, Masten, Textilien, Flaschen, CDs, CD-Cover, Uhren, Uhrgläser, Lederwaren, Filme, Bilder, Fotos, Klebebänder, Führerscheine, Ausweispapiere, Scheckkarten, Registrierkarten, Chipkarten, Schreibgeräte, Nagelfeile, Urnen, Schmuck, Münzen, Kunstwerke, Bucheinbände, Grabsteine, Schilder (z.B. Verkehrsschilder), Textilien, Schutzbrillen, Dichtungen für die Installation, Kleber, Klebebänder zur Abdichtung, Klebebänder zur Korrosionsvermeidung, Scheibenabdichtungsband, rissfeste Klebebänder, Klebebänder-Primer, abriebfeste Klebebänder, chemikalienresistente Klebebänder, transparente Klebebänder, wieder lösbare Klebebänder, Filmklebebänder, Klebebänder mit hoher Reißfestigkeit, Klebebänder mit hoher Chemikalienbeständigkeit, Klebebänder für Verbindungen von Nieder- und Hochenergieoberflächen, Acrylschaumklebebänder, hitzeaktivierbare Klebebänder in Haftvermittlern, doppelseitige Klebebänder, transparente alterungsbeständige Klebebänder, Antikratz-Klebebänder, Gleitschutzklebebänder, kratzfeste Klebebänder, Verpackungsklebebänder, Transportklebebänder, reißfeste Klebebänder, Klebebänder zur Vermeidung von galvanischer Korrosion, hitzebeständige Abdeckklebebänder, strapazierfähige Abklebbänder, lösungsmittelbeständige Abklebbänder, Scheibenabdeckbänder, Transferklebebänder, transparente Abklebbänder, Papierklebebänder, Sprühkleber, wieder ablösbare Sprühkleber, Permanent-Sprühkleber, Transferklebstoffe, thermisch leitfähige Klebstoffe, thermisch leitfähige Klebstoffilme, thermisch leitfähige Epoxy-Klebstoffe, isotropisch und anisotropisch leitende Klebstofffilme, Siebdruckkleber, UV-trocknende Siebdruckklebstoffe, Konstruktionsklebstoffe zum Verkleben von Niederenergiekunststoffen, Dispersionsklebstoffe für die Verklebung von hochenergetischen Kunststoffen, beschichtete Metallbleche, Leder und Textilien, Schmelzklebstoffe, Mehrzweckklebstoffe, Klebstoffe zum Verkleben unterschiedlicher Metalle, Klebstoffe zum Kleben von Metallen und Kunststoffen, Klebstoffe zum Kleben von Metallen und Glas, Scheibenverbundkleber, Gewebebänder, z.B. zum Verschließen, Abdichten, Bündeln, Kennzeichnen und Verstärken, wasserabweisende Gewebebänder, alterungsbeständige Gewebebänder, strapazierfähige Gewebebänder, Kreppklebebänder, Siegelband, chemikalienbindende Vliese, industriebindende Vliese, ölbindende Vliese, Absorptionsmaterialien mit exzellenten Absorptions- und Gewichtsverhältnissen Sicherheitsbeläge auf Böden, selbstklebende Antirutschbeläge, Sicherheitsbeläge auf Fahrzeugen, Poliermedien, Polierpads, Polierschwämme, Polierscheiben, Polierpasten, Poliertücher, Schleifmittel, Schleifpapier, strukturierte Schleifmittel, Oberflächenschutzfolien, hochtemperaturbeständige Abdeckfolien Splitterschutzfolien, Schaufensterfolien, Schaufensterfilme, reflektierende Folien für Verkehrsbeschilderung, Retro-reflektierende Folien, Designfolien, flexible Folien, Signalfolien Farbfolien, Lackschutzfolien, Kopierfolien, Universalfolien, Präsentationshüllen, Laminierfolien, Korrosionsschutzfolien, Akustikisolationsfolien für Baustellenprodukte, Steinschlagschutzfolien, chemikalienresistente Abklebfolien und Abdeckfolien, Sonnenschutzfolien, Hitzeschutzfolien, selbstklebende Dichtungen, leicht entfernbare Schilder, Scheibenabdeckfolien, Hochleistungsfolien für extreme Temperaturen, Hochleistungsfolien mit extremer Chemikalienbeständigkeit, Hochleistungsfolien mit extremer Abriebfestigkeit, bedruckbare Folien (z.B. für Laserdrucker, Inkjet-Drucker), Mehrschichtfolien, Laser- und Gravurfolien, für das Recycling kompatible Folien, Sicherheitsetiketten, Kennzeichnungsetiketten, Labels, selbstklebende Elastikpuffer.

Keramikteile werden als Bauteile in Maschinen, Anlagen, Verkehrsmitteln, elektrischen, elektronischen sowie informationsverarbeitenden Komponenten bzw. Geräten und Konsumgütern eingesetzt. Ebenfalls werden Werkzeuge, Prothesen, Zahnersatzteile (Brücken, Inlays, Kronen, Zahnimplantate), Sensoren usw. aus den amphiphilen Nanopartikeln hergestellt.

Weitere Beispiele für Teile oder Komposite sind Zahnräder, Kugel- und Wälzlager, Düsen, Ziehsteine, Drahtführungen, Lagerschalen, Strangpressmatrizen, Spinndüsen, Fadenführungen, Ventile, Zylinder, Zylinderköpfe, Pumpenteile, Tüllen, Katalysatorträger, Feuerfestauskleidungen, Tiegel, Fasern, Klingen für Messer, Scheren bzw. Schneid- und Häckselwerkzeuge, Mikrobauteile (z.B. Zahnräder, Reaktorbehälter), Heizleiter, Elektrolyte, Sauerstoffleiter (als Sensoren in Lambdasonden und Metallschmelzen), Oszillatoren, Piezoelektrika, Hochfrequenzinduktionsspulen. Beispiele für poröse Teile sind Filter, Katalysatorträger und Adsorbermaterialien. Weitere Beispiele sind Schneidwerkzeuge, Schleifmittel, umwandlungsverstärkte Keramiken, Wärmedämmschichten, elektrische Isolierwerkstoffe, tribologische Schichten, Gleitlager, Sauerstoffsensoren (Lambdasonde), Sauerstoffionenleiter (Elektrodenmaterial), Piezoelektrika, hitze- und oxidationsbestände Ofenteile, Brennerteile, Abgasführungen, Bremsscheiben, Fahrradfelgen, Radlager, Einspritzpumpen, Lambdasonden, Zylinderlaufbuchsen, Brennstoffzellen, Zündkerzenisolator, Glühkerzenisolator, Abgaskrümmer, Turboladerschaufeln, Ventilfedern, Geschirr, Messer, Scheren, Schneidwerkzeuge, Backofenauskleidung, Backofenfiltermaterial, Heizplatten, Haushaltsmühlen, Fleischwolf, Pressen, Kochutensilien (Löffel, Raspel), Griffe für Pfannen und Töpfe, Türgriffe, Keramikdichtungen für Wasserhähne und - ventile, Kacheln, Nagelfeilen, Töpfe, Vasen, Mörser, Kerzenleuchter, Waschmaschinentrommellager, Brennstoffzelle, Ölbrenner und Gasbrenner und deren Auskleidungen, Radlager für Sportgeräte, Gleitringe für Angeln, Freizeitmesser, Werkzeuge, Hochdruckreiniger, Dosierpumpen.

Die Verwendung von amphiphilen Nanopartikeln nach der Erfindung in zweidimensionalen Strukturen, insbesondere Schichten, Folien und Membranen, eröffnet eine Reihe von Vorteilen. Beispielen für geeignete Gegenstände werden im folgenden zusammen mit den sich ergebenden Vorteilen erläutert.

Es ergibt sich ein Schutz gegen Verschleiß und Korrosion. Dies ist z.B. vorteilhaft im Bereich der chemischen Industrie für Behälter- und Rohrwandungen von Reaktionsgefäßen, Rührern, Pumpen (Gehäuse, Schaufeln/Rotoren, Ventile), Ventilen und Sensoren (Thermoelemente, Füllstandsensoren, Drucksensoren, Näherungsschalter, Entfernungssensoren, Messzellen von Mass-Flow-Controllern); im Automobilbereich sowie im Bereich stationärer Otto- und Dieselmotoren vor allem für bewegte Teile wie Kolben, Kolbenringe, Zylinder, Ventile, Wellen, Lagersitze, Lagerflächen, aber auch Schwung-, Brems- und Kupplungsscheiben, im Bereich der Metallverarbeitung zur Herstellung von Werkzeugen zur spanenden Metallverarbeitung (Drehen, Fräsen, Bohren, Sägen) und zur Herstellung von Stanz- und Pressformen.

Man erhält korrosionsfeste Isolatorschichten (elektrische Isolation). Dies ist z.B. vorteilhaft auf metallischen Substraten/Oberflächen (Stromführungen) im Bereich der Feuerungs- und Heiztechnik und des Ofenbaus insbesondere im Bereich der keramischen Industrie/Verfahrenstechnik, der Montan- sowie Chemischen Industrie, im Bereich der Sensorik als korrosionsfeste elektrische Isolierung von Sensoren, Leiterbahnen, Gehäusen und für SOFC (Herstellung dünner gasdichter Schichten (Dicke < 2 µm) auf keramischen Substraten mit gezielter Einstellung von Dicke, Gefüge und Sauerstoffionenleitfähigkeit).

Durch die erfindungsgemäße Verwendung können niedrig sinternde poröse Schichten hergestellt werden. Die hohe spezifische Oberfläche der porösen Schichten ermöglicht verbesserte katalytische und sensitive Eigenschaften. Als Anwendungen sind dabei zu nennen die Sauerstoffsensorik in Heißgasen (Abgase) im AutomobilBereich sowie für stationäre Otto- oder Dieselmotoren, im Bereich der Kraft- Wärmeversorgung, im Montanbereich und der chemischen Industrie.

Im Bereich der Katalyse dient können die amphiphilen Nanopartikel zur Herstellung eines porösen Substrats (Katalysatorträger) verwendet werden. Anwendungsbereiche sind die Reinigung von Gasen sowie Gas/Partikelgemischen, z.B. im Bereich Motorabgase im Automobilbereich, Industrieabgase (Rauchgase, Verhinderung von Geruchsbelästigungen und Gesundheitsbeeinträchtigungen), im Bereich der chemischen Industrie bei der katalytischen Synthese gasförmiger oder flüssiger Produkte in Reaktorbehältern und Rohrreaktoren.

Weitere Anwendungsgebiete dieser Materialien sind Wärmedämmschichten in allen Bereichen der Heißgasbeaufschlagung wie in stationären und mobilen Gasturbinen (Schaufeln, Gaszuführungen), Auskleidungen von Abgasführungen im Automobilbereich sowie stationärer Otto- und Dieselmotoren und die Verwendung poröser Schichten als Adsorbermaterialien.

Weitere Verwendungsmöglichkeiten sind die Herstellung korrosionsfester, selbsttragender, niedrig sinternder, dünnwandiger keramischer Bauteile in ein- und mehrlagiger Ausführung (Laminate), z.B. als Plattierungen/Auskleidungen: Korrosionsschutz für die chemische Industrie für Behälter- und Rohrwandungen von Reaktionsgefäßen, Rührer, für Gehäuse von Pumpen, Ventilen, Sensoren, als Substrate für die Elektronikindustrie, z.B. Mikroelektronik, hochintegrierte Schaltkreise im Bereich der Computer- und Mobilfunktechnologie, sowie mobile Mess-/Regelgeräte.

Es können anorganische, hochtemperaturfeste, korrosionsstabile Membranen hergestellt werden, z.B. Mehrlagenstrukturen mit dünner Trennmembran (Dicke < 2 µm), dabei können die eigentliche Trennmembran wie, die poröse Stützmatrix nanodisperses ZrO₂ enthalten, Heißgasextraktion, H₂-Gewinnung (Reformierung), Hochtemperatur- und korrosionsstabile UF- oder NF-Membranen (chemische Industrie: Aufkonzentration von Produkten, Abtrennung von Verunreinigungen, Umwelt: Abwasserreinigung; Medizin: sterilisierbare keramische Filter mit Porendurchmesser im Bereich von 0,1-10 nm).

Es können Funktionsbeschichtungen mit nanodispersen Partikeln als anorganischer Bindephase hergestellt werden, z.B. zur Anbindung von anorganischen Materialien auf Substraten aus Metall, Keramik, Glas zur Herstellung von Funktionsbeschichtungen, als hochtemperaturfeste tribologische Schichten, hochtemperaturstabile Formtrennschichten, Hochtemperatur- Easy-to-Clean-Schichten, zur Verhinderungen von Korrosionsschäden*an Formen durch aggressive flüssige Medien wie Metall- oder Kunststoffschmelzen, zur Verhinderung von Ablagerungen im gewerblichen und privaten Bereich, insbesondere im Bereich der Feuerungstechnik (Kamine, Heizungszüge, Öfen, Heizkessel, Rohre, Ventile, Sensoren), der chemischen Industrie (Rühr- und Reaktionskessel, Rohrwandungen, Rührer, Ventile, Pumpen, Kessel) der metallverarbeitenden Industrie (Gießlöffel, Gießdüsen, Lötdüsen, Steigrohre, Pumpen (Kolben, Rotoren, Zylinder, Gehäuse, Ein- und Auslässe) und in der Lebensmittelindustrie (Ofen, Backbleche bzw. -formen, Rührbehälter, Vorratsbehälter (Silowandungen, Austragschnecke, Zellenradschleusen, Rohrleitungen), Extruder (Schnecken, Kolben, Zylinder, Düsen), Transporteinrichtungen insbesondere Bänder.

Ein weiteres Beispiel sind Fügefolien und Substrate zur Herstellung von Sandwichstrukturen aus Keramik, Glas und Keramik sowie Metall und Keramik.

Es folgen Beispiele zur Erläuterung der Erfindung.

### Beispiel 1 Herstellung amphiphiler ZrO₂-Nanopartikel (Dispersionsmittel i-PrOH)

7,6 g (70 % in n-PrOH) Zr(OPr)₄ wurden mit 136 g n-Hexanol zusammengegeben und nach 5 min Rühren bei Raumtemperatur wurden 0,90 g 37%ige HCl in 6 g n-Hexanol zugesetzt. Danach wurde die gesamte Mischung bei 250°C und 300 bar 7 h lang behandelt.

Die gebildeten amphiphilen ZrO₂-Nanopartikel mit Hexoxygruppen an der Oberfläche wurden abzentrifugiert und in 5 ml i-PrOH aufgenommen. Anschließend wurde bei 50°C und 10 mbar getrocknet. HR-TEM-Aufnahmen zeigen, dass die Teilchen kristallin sind und die Teilchengrößen bei 3 bis 5 nm liegt.

### Beispiel 2 Einbau der ZrO₂-Teilchen in NANO-Matrix (Dispersionsmittel Wasser)

0,2 g des nach Beispiel 1 hergestellten ZrO₂-Pulvers wurden mit 0,5 g destilliertem Wasser versetzt und dann 2 bis 3 min mit Ultraschall behandelt und anschließend mit 0,5 g IPE (Isopropoxyethanol) versetzt. Danach wurde zu der klaren Dispersion 2 g NANO-Lack (in DE-A-4338361 beschriebener Lack, der Böhmit und ein Kondensationsprodukt aus einem Epoxidsilan, einem Tetraalkoxysilan und Aluminiumbutylat umfasst) zugetropft und die Mischung mit 2 g IPE verdünnt. PC-Platten wurden mit der so hergestellten Beschichtungszusammensetzung mit einem Schleuderbeschichter (1.000 U/min, 10 s) beschichtet und bei 130°C 1 h getrocknet. Die Brechzahl betrug 1,535.

0,5 g des nach Beispiel 1 hergestellten ZrO₂-Pulvers wurden mit 1,0 g destilliertem Wasser versetzt und dann 2 bis 3 min mit Ultraschall behandelt und anschließend mit 1,0 g IPE versetzt. Danach wurden zu der klaren Dispersion 2 g NANO-Lack zugetropft und anschließend mit 4 g IPE verdünnt. PC-Platten wurden mit der so hergestellten Beschichtungszusammensetzung mit einem Schleuderbeschichter (1.000 U/min, 10 s) beschichtet und bei 130°C 1 h getrocknet. Die Brechzahl betrug 1,581.

0,73 g nach Beispiel 1 hergestellten ZrO₂-Pulvers wurden mit 1,5 g destilliertem Wasser versetzt und dann 2 bis 3 min mit Ultraschall behandelt und anschließend mit 1,5 g IPE versetzt. Danach wurde zu der klaren Dispersion 2 g NANO-Lack zugetropft und anschließend mit 5 g IPE verdünnt. PC-Platten wurden mit der so hergestellten Beschichtungszusammensetzung mit einem Schleuderbeschichter (1.000 U/min, 10 s) beschichtet und bei 130°C 1 h getrocknet. Die Brechzahl betrug 1,605.

### Beispiel 3 Herstellung amphiphiler ZrO₂-Nanopartikel (Dispersionsmittel Hexan)

Das Beispiel 1 wurde wiederholt, wobei die gebildeten amphiphilen ZrO₂-Nanopartikel mit Hexoxygruppen an der Oberfläche nach Abzentrifugieren statt in Methanol in 5 ml n-Hexan aufgenommen wurden. Anschließend wurde bei 50°C und 10 mbar getrocknet. TEM-Aufnahmen zeigen, dass die Teilchen kristallin sind und die Teilchengrößen bei 4 bis 5 nm liegt.

### Beispiel 4 Einbau der ZrO₂-Teilchen in NANO-Matrix (Dispersionsmittel Toluol)

0,2 g des nach Beispiel 3 hergestellten ZrO₂-Pulvers wurden mit 0,5 g Toluol versetzt und dann 2 bis 3 min mit Ultraschall behandelt. Danach wurde zu der klaren Dispersion 2 g NANO-Lack zugetropft und die Mischung mit 2 g IPE verdünnt. PC-Platten wurden mit der so hergestellten Beschichtungszusammensetzung mit einem Schleuderbeschichter (1.000 U/min, 10 s) beschichtet und bei 130°C 1 h getrocknet. Die Brechzahl betrug 1,535.

0,5 g des nach Beispiel 3 hergestellten ZrO₂-Pulvers wurden mit 1,0 g Toluol versetzt und dann 2 bis 3 min mit Ultraschall behandelt. Danach wurden zu der klaren Dispersion 2 g NANO-Lack zugetropft und anschließend mit 4 g IPE verdünnt. PC-Platten wurden mit der so hergestellten Beschichtungszusammensetzung mit einem Schleuderbeschichter (1.000 U/min, 10 s) beschichtet und bei 130°C 1 h getrocknet. Die Brechzahl betrug 1,581.

0,73 g nach Beispiel 3 hergestellten ZrO₂-Pulvers wurden mit 1,5 g Toluol versetzt und dann 2 bis 3 min mit Ultraschall behandelt. Danach wurde zu der klaren Dispersion 2 g NANO-Lack zugetropft und anschließend mit 5 g IPE verdünnt. PC-Platten wurden mit der so hergestellten Beschichtungszusammensetzung mit einem Schleuderbeschichter (1.000 U/min, 10 s) beschichtet und bei 130°C 1 h getrocknet. Die Brechzahl betrug 1,605.

## Patentansprüche

1. Verfahren zur Herstellung amphiphiler nanoskaliger Teilchen, die auf der Oberfläche hydrolysierbare Reste aufweisen, die lipophil sind, welches umfasst a) die Hydrolyse und Kondensation einer oder mehrerer hydrolysierbarer Verbindungen, die mindestens eine lipophile hydrolysierbare Gruppe umfassen, mit einer unterstöchiometrischen Menge Wasser und b) das Entfernen von Lösungsmittel, um die erhaltenen amphiphilen Teilchen mit hydrolysierbaren Resten als Pulver zu erhalten.

2. Verfahren zur Herstellung amphiphiler nanoskaliger Teilchen nach Anspruch 1, **dadurch gekennzeichnet, dass** die hydrolysierbare Verbindung eine hydrolysierbare Metall- oder Halbmetallverbindung, die gegebenenfalls eine oder mehrere nicht hydrolysierbare Gruppen umfasst, oder ein davon abgeleitetes Kondensationsprodukt ist.

3. Verfahren zur Herstellung amphiphiler nanoskaliger Teilchen nach Anspruch 1 oder 2, **dadurch gekennzeichnet, dass** die hydrolysierbare Verbindung ein Alkoxid ist.

4. Verfahren zur Herstellung amphiphiler nanoskaliger Teilchen nach einem der Ansprüche 1 bis 3, **dadurch gekennzeichnet, dass** die hydrolysierbare Verbindung ausgewählt wird aus Mg-, Si-, Ge-, Al-, B-, Zn-, Cd-, Ti-, Zr-, Ce-, Sn-, In-, La-, Fe-, Cu-, Ta-, Nb-, V-, Mo- oder W-Verbindungen oder davon abgeleiteten Kondensationsprodukten.

5. Verfahren zur Herstellung amphiphiler nanoskaliger Teilchen nach einem der Ansprüche 1 bis 4, **dadurch gekennzeichnet, dass** der hydrolysierbare Rest einen lipophilen Teil aus mindestens 4, bevorzugt mindestens 5 Kohlenstoffatomen umfasst.

6. Verfahren zur Herstellung amphiphiler nanoskaliger Teilchen nach einem der Ansprüche 1 bis 5, **dadurch gekennzeichnet, dass** die erhaltenen amphiphilen Teilchen mit hydrolysierbaren Resten mit einem Oberflächenmodifizierungsmittel umgesetzt werden, um die amphiphilen Teilchen mit Funktionsgruppen an der Oberfläche zu ergänzen, wobei die Umsetzung gegebenenfalls in einem Lösungsmittel durchgeführt wird.

7. Verfahren zur Herstellung amphiphiler nanoskaliger Teilchen nach Anspruch 6, **dadurch gekennzeichnet, dass** das Oberflächenmodifizierungsmittel eine gesättigte oder ungesättigte Carbonsäure, eine β-Dicarbonylverbindung, ein Amin, eine Phosphonsäure, eine Sulfonsäure oder ein Silan ist.

8. Verfahren zur Herstellung amphiphiler nanoskaliger Teilchen nach Anspruch 6 oder 7, **dadurch gekennzeichnet, dass** das Oberflächenmodifizierungsmittel neben mindestens einer funktionellen Gruppe zur Anbindung oder Komplexierung an die Oberfläche der Teilchen mindestens eine weitere funktionelle Gruppe aufweist.

9. Verfahren zur Herstellung amphiphiler nanoskaliger Teilchen nach einem der Ansprüche 6 bis 8, **dadurch gekennzeichnet, dass** das Oberflächenmodifizierungsmittel ein Komplexbildner ist.

10. Amphiphile nanoskalige Teilchen, die auf der Oberfläche hydrolysierbare Reste aufweisen, die lipophil sind.

11. Amphiphile nanoskalige Teilchen nach Anspruch 10, **dadurch gekennzeichnet, dass** der hydrolysierbare Rest einen lipophilen Teil aus mindestens 4, bevorzugt mindestens 5 Kohlenstoffatomen umfasst.

12. Amphiphile nanoskalige Teilchen nach Anspruch 10 oder 11, **dadurch gekennzeichnet, dass**, der hydrolysierbare Rest ein Alkoxy-, Alkenyloxy-, Alkinyloxy-, Aryloxy-, Aralkyloxy-, Alkaryloxy-, Ether-, Acyloxy-, Alkyl- oder Acylrest ist, der gegebenenfalls fluoriert ist.

13. Amphiphile nanoskalige Teilchen nach einem der Ansprüche 10 bis 12, **dadurch gekennzeichnet, dass** der hydrolysierbare Rest ein C₄-C₂₀-Alkoxyrest, insbesondere ein Pentoxy- oder Hexoxyrest, ist.

14. Amphiphile nanoskalige Teilchen nach einem der Ansprüche 10 bis 13, **dadurch gekennzeichnet, dass** die hydrolysierbaren Reste von hydrolysierbaren Vorstufen der Teilchen stammen.

15. Amphiphile nanoskalige Teilchen nach einem der Ansprüche 10 bis 14, **dadurch gekennzeichnet, dass** die Teilchen ein oder mehrere Oxide von einem oder mehreren Metallen oder Halbmetallen umfassen, wobei die Oxide gegebenenfalls hydratisiert sind.

16. Amphiphile nanoskalige Teilchen nach einem der Ansprüche 10 bis 15, **dadurch gekennzeichnet, dass** die Teilchen eine Verbindung von einem oder mehreren Metallen oder Halbmetallen ausgewählt aus Mg, Si, Ge, Al, B, Zn, Cd, Ti, Zr, Ce, Sn, In, La, Fe, Cu, Ta, Nb, V, Mo oder W umfassen.

17. Amphiphile nanoskalige Teilchen nach einem der Ansprüche 10 bis 16, **dadurch gekennzeichnet, dass** die Teilchen mit Funktionsgruppen oberflächenmodifiziert sind.

18. Amphiphile nanoskalige Teilchen nach Anspruch 17, **dadurch gekennzeichnet, dass** die Funktionsgruppe mindestens eine funktionelle Gruppe umfasst.

19. Amphiphile nanoskalige Teilchen nach Anspruch 18, **dadurch gekennzeichnet, dass** die funktionelle Gruppe in der Lage ist, mit funktionellen Gruppen der gleichen oder einer anderen Art Vernetzungsreaktionen einzugehen.

20. Amphiphile nanoskalige Teilchen nach Anspruch 18 oder 19, **dadurch gekennzeichnet, dass** die funktionelle Gruppe eine Hydroxy-, Epoxid-, Thiol-, Amino-, Carboxyl-, Carbonsäureanhydrid-, lsocyanato-, Sulfonsäure-, Phosphonsäure-, quaternäre Amin-, C-C-Doppelbindungs-, fluorierte Kohlenwasserstoff- oder Carbonylgruppe ist.

21. Amphiphile nanoskalige Teilchen nach einem der Ansprüche 10 bis 20, **dadurch gekennzeichnet, dass** die Teilchen dotiert sind.

22. Amphiphile nanoskalige Teilchen nach einem der Ansprüche 10 bis 21, **dadurch gekennzeichnet, dass** sie in Form eines Pulvers vorliegen.

23. Amphiphile nanoskalige Teilchen nach einem der Ansprüche 10 bis 22, **dadurch gekennzeichnet, dass** sie einen Überzug aus einem anderen Material unter Bildung eines Kern/Schale-Systems aufweisen.

24. Zusammensetzung umfassend amphiphile nanoskalige Teilchen nach einem der Ansprüche 10 bis 23 und ein Matrix-bildendes Material.

25. Zusammensetzung nach Anspruch 24, **dadurch gekennzeichnet, dass** die amphiphilen Teilchen durch Oberflächenmodifizierung funktionelle Gruppen aufweisen, die mit funktionellen Gruppen des Matrixbildenden Materials Vernetzungsreaktionen eingehen können.

26. Zusammensetzung nach Anspruch 24 oder 25, **dadurch gekennzeichnet, dass** die Zusammensetzung eine Beschichtungszusammensetzung, ein Klebstoff, eine Harzzusammensetzung, eine Dichtungsmasse, eine Paste, eine Formmasse oder ein Schlicker ist.

## Claims

1. Process for producing amphiphilic nanoscale particles which have, on the surface, hydrolyzable radicals which are lipophilic, comprising a) the hydrolysis and condensation of one or more hydrolyzable compounds which include at least one lipophilic hydrolyzable group with a substoichiometric amount of water and b) the removal of solvent in order to obtain the resulting amphiphilic particles with hydrolyzable radicals as powder.

2. Process for producing amphiphilic nanoscale particles according to Claim 1, **characterized in that** the hydrolyzable compound is a hydrolyzable metal or semimetal compound which optionally includes one or more unhydrolyzable groups, or is a condensation product derived therefrom.

3. Process for producing amphiphilic nanoscale particles according to Claim 1 or 2, **characterized in that** the hydrolyzable compound is an alkoxide.

4. Process for producing amphiphilic nanoscale particles according to one of Claims 1 to 3, **characterized in that** the hydrolyzable compound is selected from Mg, Si, Ge, Al, B, Zn, Cd, Ti, Zr, Ce, Sn, In, La, Fe, Cu, Ta, Nb, V, Mo or W compounds, or condensation products derived therefrom.

5. Process for producing amphiphilic nanoscale particles according to one of Claims 1 to 4, **characterized in that** the hydrolyzable radical includes a lipophilic moiety composed of at least 4, preferably at least 5 carbon atoms.

6. Process for producing amphiphilic nanoscale particles according to one of Claims 1 to 5, **characterized in that** the resulting amphiphilic particles having hydrolyzable radicals are modified with a surface modifier in order to supplement the amphiphilic particles with functional groups on the surface, the reaction optionally being carried out in a solvent.

7. Process for producing amphiphilic nanoscale particles according to Claim 6, **characterized in that** the surface modifier is a saturated or unsaturated carboxylic acid, a β-dicarbonyl compound, an amine, a phosphonic acid, a sulfonic acid or a silane.

8. Process for producing amphiphilic nanoscale particles according to Claim 6 or 7, **characterized in that** the surface modifier, in addition to at least one functional group for attachment or complexation to the surface of the particles, has at least one further functional group.

9. Process for producing amphiphilic nanoscale particles according to one of Claims 6 to 8, **characterized in that** the surface modifier is a complexing agent.

10. Amphiphilic nanoscale particles which have, on the surface, hydrolyzable radicals which are lipophilic.

11. Amphiphilic nanoscale particles according to Claim 10, **characterized in that** the hydrolyzable radical includes a lipophilic moiety composed of at least 4, preferably at least 5 carbon atoms.

12. Amphiphilic nanoscale particles according to Claim 10 or 11, **characterized in that** the hydrolyzable radical is an alkoxy, alkenyloxy, alkynyloxy, aryloxy, aralkyloxy, alkaryloxy, ether, acyloxy, alkyl or acyl radical which is optionally fluorinated.

13. Amphiphilic nanoscale particles according to one of Claims 10 to 12, **characterized in that** the hydrolyzable radical is a C₄-C₂₀-alkoxy radical, in particular a pentoxy or hexoxy radical.

14. Amphiphilic nanoscale particles according to one of Claims 10 to 13, **characterized in that** the hydrolyzable radicals stem from hydrolyzable precursors of the particles.

15. Amphiphilic nanoscale particles according to one of Claims 10 to 14, **characterized in that** the particles comprise one or more oxides of one or more metals or semimetals, the oxides optionally being hydrated.

16. Amphiphilic nanoscale particles according to one of Claims 10 to 15, **characterized in that** the particles comprise a compound of one or more metals or semimetals selected from Mg, Si, Ge, Al, B, Zn, Cd, Ti, Zr, Ce, Sn, In, La, Fe, Cu, Ta, Nb, V, Mo or W.

17. Amphiphilic nanoscale particles according to one of Claims 10 to 16, **characterized in that** the particles have been surface-modified with function groups.

18. Amphiphilic nanoscale particles according to Claim 17, **characterized in that** the function group comprises at least one functional group.

19. Amphiphilic nanoscale particles according to Claim 18, **characterized in that** the functional group is capable of entering into crosslinking reactions with functional groups of the same type or of a different type.

20. Amphiphilic nanoscale particles according to Claim 18 or 19, **characterized in that** the functional group is a hydroxyl, epoxy, thiol, amino, carboxyl, carboxylic anhydride, isocyanate, sulfonic acid, phosphonic acid, quaternary amine, C-C double bond, fluorinated hydrocarbon or carbonyl group.

21. Amphiphilic nanoscale particles according to one of Claims 10 to 20, **characterized in that** the particles have been doped.

22. Amphiphilic nanoscale particles according to one of Claims 10 to 21, **characterized in that** they are present in the form of a powder.

23. Amphiphilic nanoscale particles according to one of Claims 10 to 22, **characterized in that** they have a coating of another material to form a core/shell system.

24. Composition comprising amphiphilic nanoscale particles according to one of Claims 10 to 23 and a matrix-forming material.

25. Composition according to Claim 24, **characterized in that** the amphiphilic particles, by virtue of surface modification, have functional groups which can enter into crosslinking reactions with functional groups of the matrix-forming material.

26. Composition according to Claim 24 or 25, **characterized in that** the composition is a coating composition, an adhesive, a resin composition, a sealant, a paste, a moulding composition or a slip.

## Revendications

1. Procédé de fabrication de particules nanométriques amphiphiles qui présentent sur la surface des radicaux hydrolysables qui sont lipophiles, qui comprend a) l'hydrolyse et la condensation d'un ou de plusieurs composés hydrolysables, qui comprennent au moins un groupe hydrolysable lipophile, avec une quantité sous-stoechiométrique d'eau et b) l'élimination de solvants pour obtenir les particules amphiphiles à radicaux hydrolysables obtenues sous la forme d'une poudre.

2. Procédé de fabrication de particules nanométriques amphiphiles selon la revendication 1, **caractérisé en ce que** le composé hydrolysable est un composé hydrolysable de métal ou de semi-métal, qui comprend éventuellement un ou plusieurs groupes non hydrolysables, ou un produit de condensation dérivé de celui-ci.

3. Procédé de fabrication de particules nanométriques amphiphiles selon la revendication 1 ou 2, **caractérisé en ce que** le composé hydrolysable est un alcoxyde.

4. Procédé de fabrication de particules nanométriques amphiphiles selon l'une quelconque des revendications 1 à 3, **caractérisé en ce que** le composé hydrolysable est choisi parmi les composés de Mg, Si, Ge, Al, B, Zn, Cd, Ti, Zr, Ce, Sn, In, La, Fe, Cu, Ta, Nb, V, Mo ou W, ou les produits de condensation dérivés de ceux-ci.

5. Procédé de fabrication de particules nanométriques amphiphiles selon l'une quelconque des revendications 1 à 4, **caractérisé en ce que** le radical hydrolysable comprend une partie lipophile d'au moins 4, de préférence d'au moins 5 atomes de carbone.

6. Procédé de fabrication de particules nanométriques amphiphiles selon l'une quelconque des revendications 1 à 5, **caractérisé en ce que** les particules amphiphiles à radicaux hydrolysables obtenues sont mises en réaction avec un agent de modification de surface afin de compléter les particules amphiphiles avec des groupes fonctionnels sur la surface, la réaction étant éventuellement réalisée dans un solvant.

7. Procédé de fabrication de particules nanométriques amphiphiles selon la revendication 6, **caractérisé en ce que** l'agent de modification de surface est un acide carboxylique saturé ou insaturé, un composé de β-dicarbonyle, une amine, un acide phosphonique, un acide sulfonique ou un silane.

8. Procédé de fabrication de particules nanométriques amphiphiles selon la revendication 6 ou 7, **caractérisé en ce que** l'agent de modification de surface comprend au moins un autre groupe fonctionnel en plus d'au moins un groupe fonctionnel pour la liaison ou la complexation à la surface des particules.

9. Procédé de fabrication de particules nanométriques amphiphiles selon l'une quelconque des revendications 6 à 8, **caractérisé en ce que** l'agent de modification de surface est un complexant.

10. Particules nanométriques amphiphiles, qui présentent sur la surface des radicaux hydrolysables qui sont lipophiles.

11. Particules nanométriques amphiphiles selon la revendication 10, **caractérisées en ce que** le radical hydrolysable comprend une partie lipophile d'au moins 4, de préférence d'au moins 5 atomes de carbone.

12. Particules nanométriques amphiphiles selon la revendication 10 ou 11, **caractérisées en ce que** le radical hydrolysable est un radical alcoxy, alcényloxy, alcynyloxy, aryloxy, aralkyloxy, alcaryloxy, éther, acyloxy, alkyle ou acyle, qui est éventuellement fluoré.

13. Particules nanométriques amphiphiles selon l'une quelconque des revendications 10 à 12, **caractérisées en ce que** le radical hydrolysable est un radical alcoxy en C₄-C₂₀, notamment un radical pentoxy ou hexoxy.

14. Particules nanométriques amphiphiles selon l'une quelconque des revendications 10 à 13, **caractérisées en ce que** les radicaux hydrolysables proviennent de précurseurs hydrolysables des particules.

15. Particules nanométriques amphiphiles selon l'une quelconque des revendications 10 à 14, **caractérisées en ce que** les particules comprennent un ou plusieurs oxydes d'un ou de plusieurs métaux ou semi-métaux, les oxydes étant éventuellement hydratés.

16. Particules nanométriques amphiphiles selon l'une quelconque des revendications 10 à 15, **caractérisées en ce que** les particules comprennent un composé d'un ou de plusieurs métaux ou semi-métaux choisis parmi Mg, Si, Ge, Al, B, Zn, Cd, Ti, Zr, Ce, Sn, In, La, Fe, Cu, Ta, Nb, V, Mo ou W.

17. Particules nanométriques amphiphiles selon l'une quelconque des revendications 10 à 16, **caractérisées en ce que** les particules sont modifiées en surface avec des groupes fonctionnels.

18. Particules nanométriques amphiphiles selon la revendication 17, **caractérisées en ce que** le groupe fonctionnel comprend au moins un groupe fonctionnel.

19. Particules nanométriques amphiphiles selon la revendication 18, **caractérisées en ce que** le groupe fonctionnel est apte à réaliser des réactions de réticulation avec des groupes fonctionnels du même type ou d'un type différent.

20. Particules nanométriques amphiphiles selon la revendication 18 ou 19, **caractérisées en ce que** le groupe fonctionnel est un groupe hydroxy, époxyde, thiol, amino, carboxyle, anhydride d'acide carboxylique, isocyanato, acide sulfonique, acide phosphonique, amine quaternaire, double liaison C-C, hydrocarbure fluoré ou carbonyle.

21. Particules nanométriques amphiphiles selon l'une quelconque des revendications 10 à 20, **caractérisées en ce que** les particules sont dopées.

22. Particules nanométriques amphiphiles selon l'une quelconque des revendications 10 à 21, **caractérisées en ce qu'**elles se présentent sous la forme d'une poudre.

23. Particules nanométriques amphiphiles selon l'une quelconque des revendications 10 à 22, **caractérisées en ce qu'**elles comprennent un revêtement en un autre matériau avec formation d'un système noyau/enveloppe.

24. Composition comprenant des particules nanométriques amphiphiles selon l'une quelconque des revendications 10 à 23 et un matériau formant une matrice.

25. Composition selon la revendication 24, **caractérisée en ce que** les particules amphiphiles présentent par modification de surface des groupes fonctionnels qui peuvent réaliser des réactions de réticulation avec des groupes fonctionnels du matériau formant une matrice.

26. Composition selon la revendication 24 ou 25, **caractérisée en ce que** la composition est une composition de revêtement, un adhésif, une composition de résine, un matériau d'étanchéité, une pâte, un matériau de moulage ou une barbotine.
